(19) Europäisches Patentamt
European Patent Office
Office européen des brevets

(11) Veröffentlichungsnummer: **0 338 310 B1**

(12) # EUROPÄISCHE PATENTSCHRIFT

(45) Veröffentlichungstag der Patentschrift: **09.12.92**

(51) Int. Cl.5: **C09B 62/018**, D06P 1/38

(21) Anmeldenummer: **89105799.4**

(22) Anmeldetag: **03.04.89**

(54) **Reaktivfarbstoffe.**

(30) Priorität: **16.04.88 DE 3812698**

(43) Veröffentlichungstag der Anmeldung:
**25.10.89 Patentblatt 89/43**

(45) Bekanntmachung des Hinweises auf die Patenterteilung:
**09.12.92 Patentblatt 92/50**

(84) Benannte Vertragsstaaten:
**CH DE FR GB LI**

(56) Entgegenhaltungen:
**EP-A- 0 099 721**
**FR-A- 1 560 653**
**FR-A- 2 197 946**

**Tetrahedron Letters, No. 16, pp. 1941-1946, 1968, Z.J. ALLAN, P. PODSTATA**

(73) Patentinhaber: **BAYER AG**
**W-5090 Leverkusen 1 Bayerwerk(DE)**

(72) Erfinder: **Henk, Hermann, Dr.**
**Roggendorfstrasse 55**
**W-5000 Koeln 80(DE)**
Erfinder: **Herd, Karl Josef, Dr.**
**Am Gartenfeld 66**
**W-5068 Odenthal(DE)**
Erfinder: **Stöhr, Frank-Michael, Dr.**
**Am Thelen Siefen 10**
**W-5068 Odenthal(DE)**

EP 0 338 310 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Reaktivfarbstoffe, die in Form der freien Säure der Formel

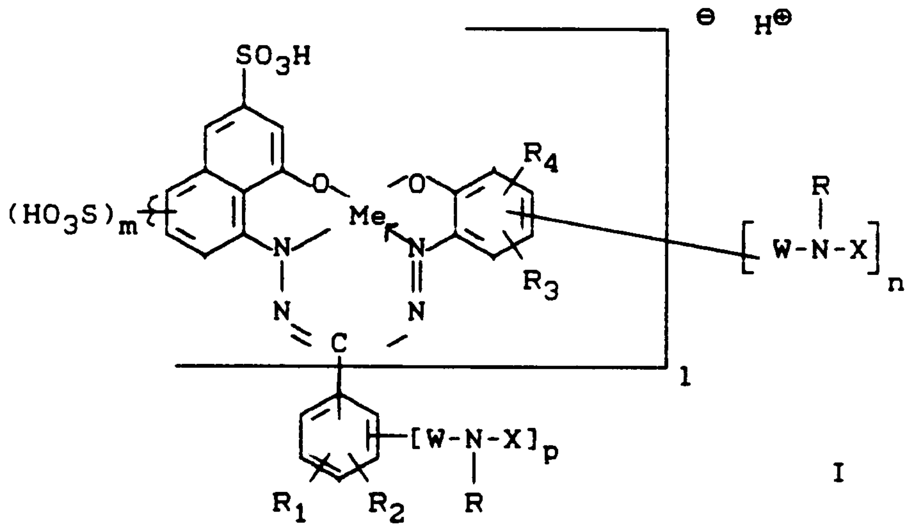

I

entsprechen, worin

| | |
|---|---|
| $R_1$ bis $R_4$ | unabhängig voneinander Wasserstoff, $C_1$-$C_4$-Alkyl, $C_1$-$C_4$-Alkoxy, Hydroxy, Halogen, Carboxy, Sulfonamido, Nitro, Alkyl- oder Aryl-carbonylamino- oder -sulfonylamino, $-SO_3H$, $SO_2-CH=CH_2$, $SO_2-CH_2-CH_2OH$, $SO_2-CH_2-CH_2-Y$, worin |
| Y | ein unter alkalischen Bedingungen abspaltbarer Rest, |
| W | direkte Bindung oder ein Brückenglied zu einem C-Atom der Benzolkerne |
| R | Wasserstoff, $C_1$-$C_4$-Alkyl, gegebenenfalls substituiert durch OH, $OSO_3H$, $SO_3H$ oder COOH |
| X | faserreaktiver Rest |
| l | 1 oder 2 |
| m | 0 oder 1 |
| n | 0 oder 1 |
| p | 0 oder 1 |
| Me | zweiwertiges Metallatom, beispielsweise Fe, Cu, Zn, Co, Ni vorzugsweise Cu, |

wobei für den Fall, daß $n+p = 0$ mindestens einer der Reste $R_1$-$R_4$ für $-SO_2-CH=CH_2$ oder $-SO_2CH_2CH_2Y$ steht. Aus der EP-A-99 721 sind bereits Formazonfarbstoffe bekannt, die aber keinen Aminonaphthylrest aufweisen.

Gegenstand der Erfindung sind weiterhin Verfahren zur Herstellung der Farbstoffe I und deren Verwendung zum Färben und Bedrucken von natürlichen und synthetischen textilen und nichttextilen OH - und NH-Gruppen enthaltender Materialien.

Beispiele für Reste Y sind: $-OSO_3H$, $-SSO_3H$, $-OCO-CH_3$, $-OPO_3H_2$, $-OSO_2-CH_3$, -SCN, $-NH-SO_2-CH_3$, -Cl, -Br, -F, $-OCO-C_6H_5$, $-OSO_2-C_6H_4-CH_3$, $-N(CH_3)_3^{\oplus}Cl^{\ominus}$.

Geeignete Alkylcarbonylaminogruppen sind beispielsweise $C_1$-$C_4$-Alkylcarbonylaminogruppen, geeignete Arylcarbonylaminogruppen sind insbesondere gegebenenfalls substituierte Phenylcarbonylaminogruppen, geeignete Sulfonamidogruppen sind insbesondere Sulfonamid, Sulfonsäuremono-und Sulfonsäure-di-$C_1$-$C_4$-alkylamid.

Geeignete Brückenglieder W sind beispielsweise $-SO_2-$, -NH-CO-NH-, -NH-CO-, $C_1$-$C_4$-Alkylen,

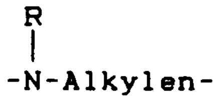,

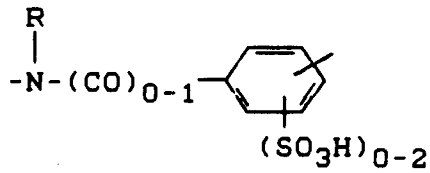

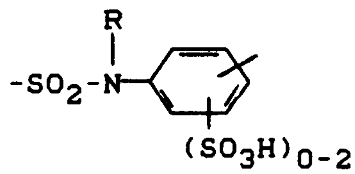

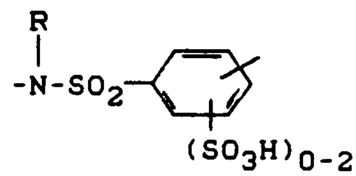

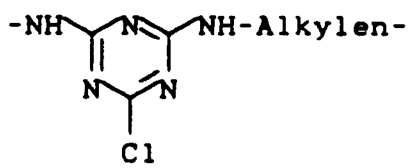,

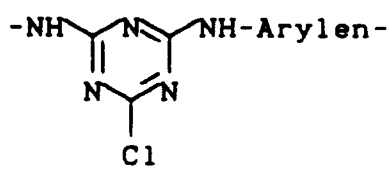

-Arylen-(O)$_{0-1}$-Alkylen-,

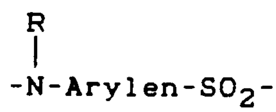,

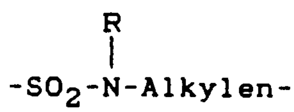,

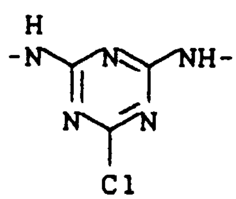,

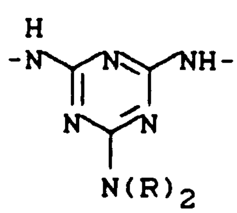

wobei
R die in Formel I genannte Bedeutung hat

Alkylen bevorzugt $C_2$-$C_5$-Alkylen und

Arylen bevorzugt gegebenenfalls substituiertes Phenyl bedeutet.

Die genannten Alkyl-, Aryl-, Alkylen- und Arylengruppen können gegebenenfalls in Farbstoffen übliche Substituenten enthalten, beispielsweise $C_1$-$C_4$-Alkyl, $C_1$-$C_4$-Alkoxy, Cl, $SO_3H$, COOH, $NO_2$, OH, $OSO_3H$.

Geeignete faserreaktive Reste X, d.h. solche die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe

aufweist, bspw. ein Chinolin-, Phthalazin-, Cinnolin-, Chinazolin-, Chinoxalin-, Acridin-, Phenazin-und Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido-($N_3$), Rhodanido, Thiolether, Oxiether, Sulfinsäure und Sulfonsäure.

Im einzelnen sind beispielsweise zu nennen:

2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substitiuertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, $C_1$-$C_4$-Alkoxy, Vinylsulfonyl-$C_2$-$C_4$-Alkoxy, substituierte Alkylsulfonyl-$C_2$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen, Acylamino, Vinylsulfonyl, substituiertes Alkylsulfonyl, Hydroxy, Amino.

Im einzelnen seien folgende Reste genannt:

2-Amino-4-fluor-triazinyl-6, 2-Methylamino-4-fluor-triazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4′-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2′,5′-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2′-Methyl-4′-sulfophenyl)-amino-4-fluor-triazinyl-6, 2-(2′-Methyl-5′-sulfophenyl)-amino-4-fluor-triazinyl-6,2-(2′-Chlor-4′-sulfophenyl)-amino-4-fluor-triazinyl-6, 2-(2′-Chlor-5′-sulfophenyl)-amino-4-fluor-triazinyl-6, 2-(2′-Methoxy-4′-sulfophenyl)-amino-4-fluor-triazinyl-6, 2-(o-, m-, p-Carboxyphenyl)-amino-4-fluor-triazinyl-6, 2-(2′,4′-Disulfophenyl)-amino-4-fluor-triazinyl-6, 2-(3′,5′-Disulfophenyl)-amino-4-fluor-triazinyl-6, 2-(2′-Carboxy-4′-sulfophenyl)-amino-4-fluor-triazinyl-6, 2-(2′-Carboxy-5′-sulfophenyl)-amino-4-fluor-triazinyl-6, 2-(6′-Sulfonaphthyl-(2′))-amino-4-fluor-triazinyl-6, 2-(4′,8′-Disulfonaphthyl-(2′))-amino-4-fluor-triazinyl-6, 2-(6′,8′-Disulfonaphthyl-(2′))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4′,6′,8′-Trisulfonaphthyl-(2′))-amino-4-fluor-triazinyl-6, 2-(3′,6′,8′-Trisulfonaphthyl-(2′))-amino-4-fluor-triazinyl-6, 2-(3′,6′-Disulfonaphthyl-(1′))-amino-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m-oder p-Sulfophenoxy)-4-fluor-triazinyl-6, 2-(o-, m-oder p-Methyl-oder-Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4′-Methylphenyl)mercapto-4-fluortriazinyl, 2-(2′,4′-Dinitrophenyl)mercapto-4-fluor-triazinyl-6, 2-Methyl-4-fluor-triazinyl-6, 2-Phenyl-4-fluor-triazinyl-6 sowie die entsprechenden 4-Chloro- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder mehreren Vinylsulfonyl- oder Sulfatoethylsulfonylresten verknüpft sein bspw. über ein Brückenglied.

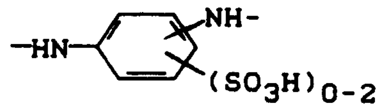

,

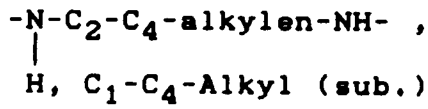

,

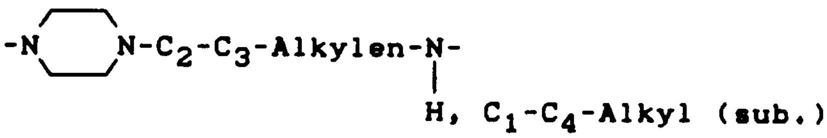

oder im Falle der Sulfatoethylsulfonyl- bzw. Vinylsulfonylgruppe über ein Brückenglied

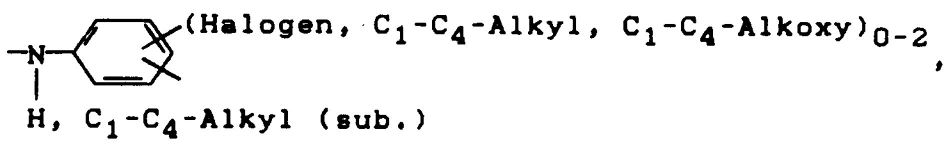

,

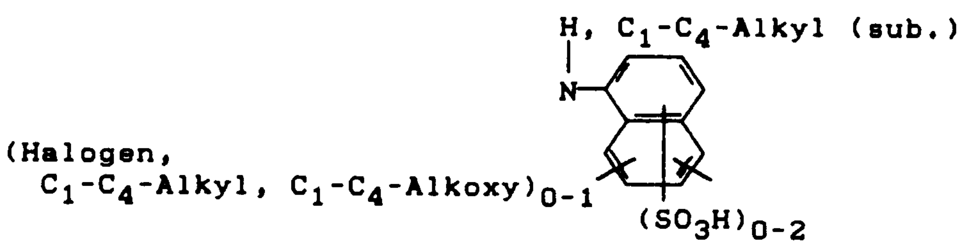

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl-oder -5-carboxy- oder -5-cyano- oder -5-vinyl- oder -5-sulfo- oder -5-mono-, -di- oder -trichlormethyl- oder -5-carbalkoxy-pyrimidinyl-6-, 2,6-Dichlorpyrimidin-4-carbonyl, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl-oder -6-carbonyl-, 2,4-Dichlorchinazolin-7- oder -6-sulfonyl- oder -carbonyl-, 2- oder 3- oder 4-(4′,5′-Dichlorpyridazon-6′-yl-1′)-phenylsulfonyl- oder -carbonyl-, β-(4′,5′-Dichlorpyridazon-6′-yl-1′)-ethyl carbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimid inyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-,2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluor-dichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbmethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbmethoxy-4-pyrimidinyl-, 2-Fluor-6-phenyl-4-pyrimidinyl-, 2-Fluor-6-cyan-4-pyrimidinyl-, 5-Chlor-6-Fluor-2-Methyl-4-pyrimidinyl-, 5,6-Difluor-2-Trifluormethyl-4-pyrimidinyl-, 5-Chlor-6-Fluor-2-Dichlorfluormethyl-4-pyrimidinyl-,

2-Fluor-5-chlorpyrimidin-4-yl, 2-Methyl-4-fluor-5-methylsulfonylpyrimidinyl-6, 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3′-Carboxyphenyl)-sulfonyl-4-chlortriazinyl-6-, 2-(3′-Sulfophenyl)-sulfonyl-4-chlortriazinyl-6-, 2,4-Bis-(3′-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-$\beta$-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6- sulfonyl- oder -carbonyl-, 2-Phenylsulfonylbenzthiazol-5- oder -6-sulfonyl- oder - carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl-oder -sulfonyl-, 2-Chlor-4-methylthiazol-(1,3)-5-carbonyl-oder -4- oder -5-sulfonyl-, N-Oxid des 4-Chlor-oder 4-Nitrochinolin-5-carbonyl.

Desweiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, $\beta$-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, $\beta$-(2,2,3,3-Tetrafluorcyclobutyl-1)-acryloyl-, $\alpha$- oder $\beta$-Bromacryloyl-, $\alpha$- oder $\beta$-Alkyl- oder -Arylsulfonylacryloyl-Gruppe, wie $\alpha$- oder $\beta$-Methylsulfonylacryloyl, Chloracetyl, Vinylsulfonyl, $-SO_2CH_2CH_2-Y$, worin Y alkalisch abspaltbare Gruppe, insbesondere $-OSO_3H$, $-OCOCH_3$, Cl, Br, F, $-SSO_3H$, $-OPO_3H_2$, $-OCOC_6H_5$, Di-$C_1$-$C_4$-Alkylamino, quartäres Ammonium, insbesondere $-N^{\oplus}(C_1-C_4\text{-Alkyl})_3An^{\ominus}$, $-OSO_2CH_3$, -SCN, $-NH-SO_2CH_3$, $-OSO_2-C_6H_4-CH_3$, $-OSO_2-C_6H_5$, -OCN,

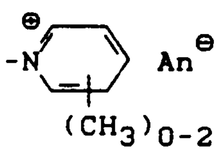

oder

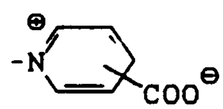

mit

$An^{\ominus}$ = Anion, bspw. $-OSO_3H$, $-SSO_3H$, $-OPO_3H_2$, -Cl, -Br, -F, -SCN, -OCN, $-OSO_2CH_3$, $-OSO_2C_6H_5$, $OCOCH_3$, -J, $-OSO_2OCH_3$, $-OSO_2C_6H_4CH_3$, $-OCOC_6H_5$,

Bevorzugte Farbstoffe sind solche der Formeln II bis VIII:

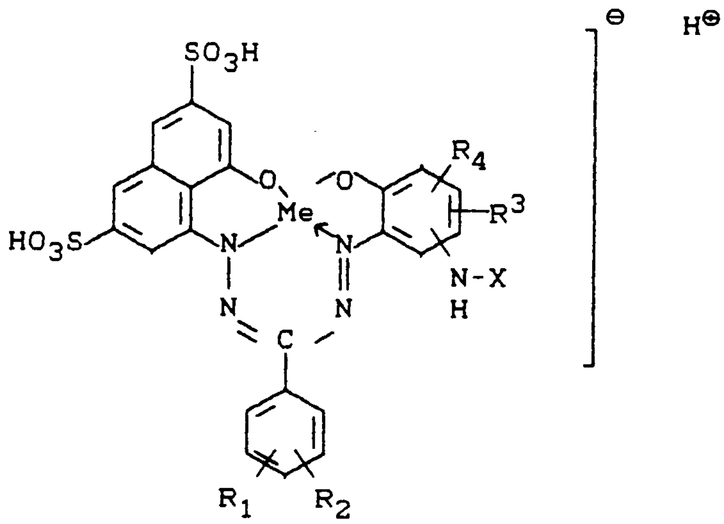

IIa

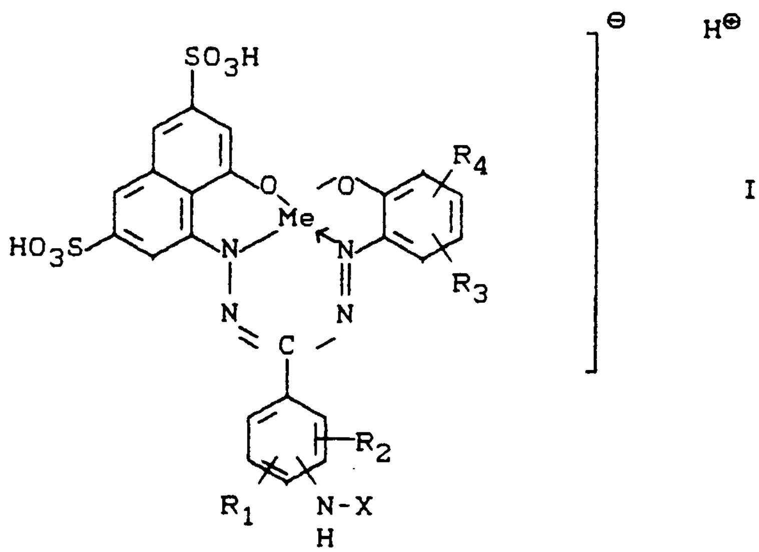

IIb

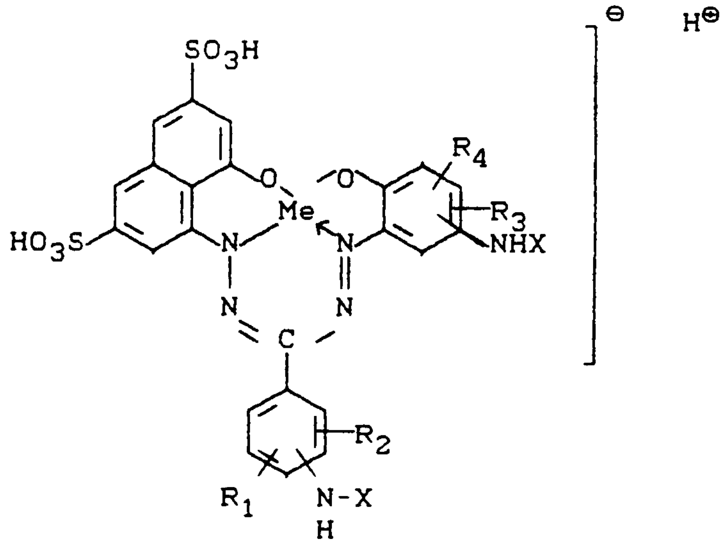

III

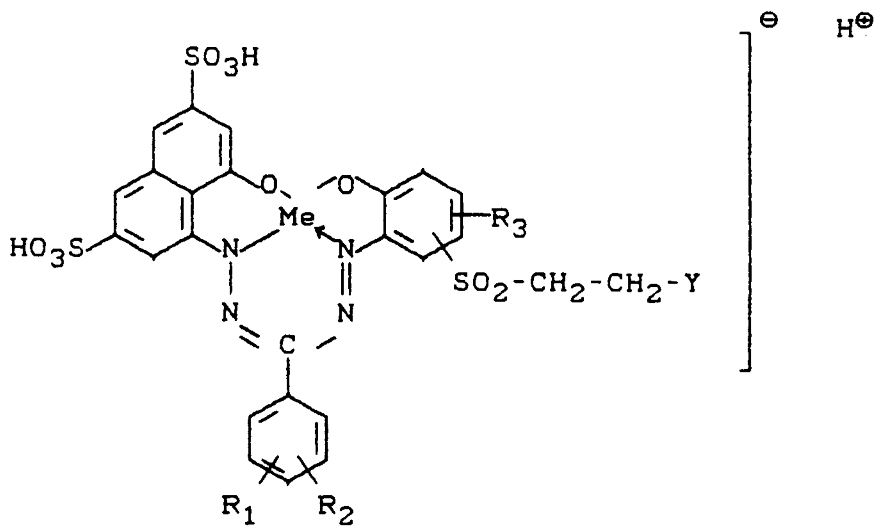

IV

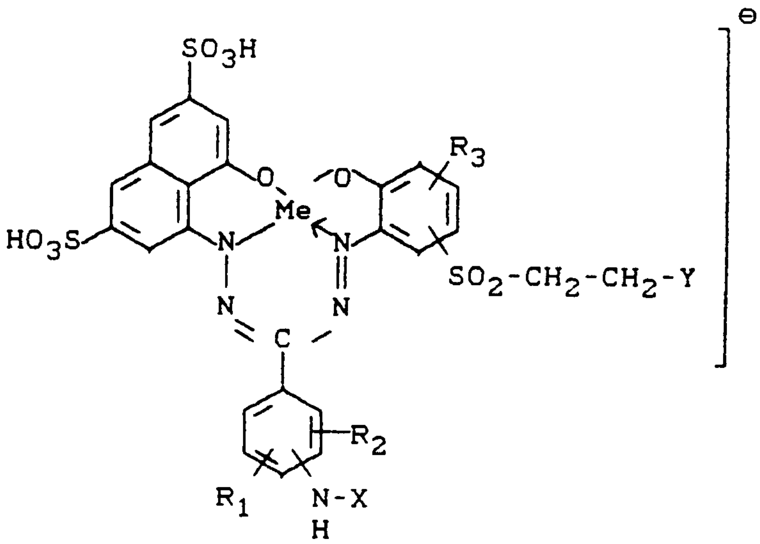

V

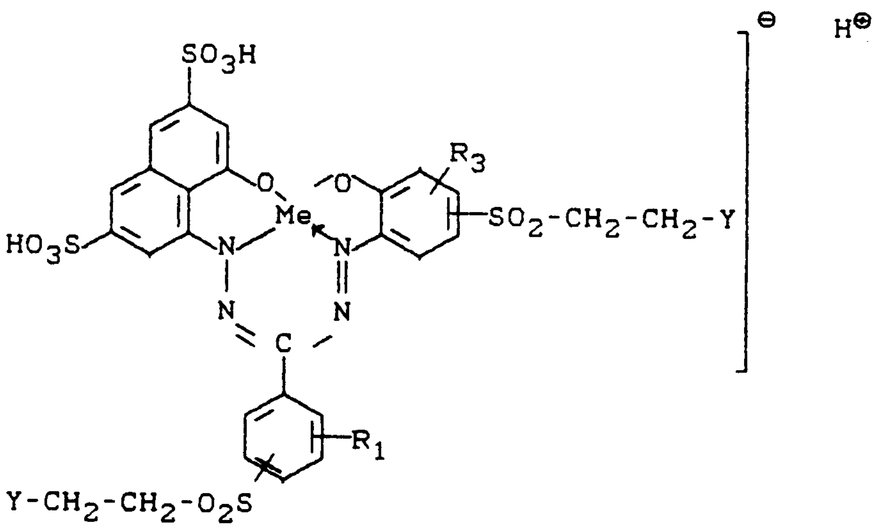

VI

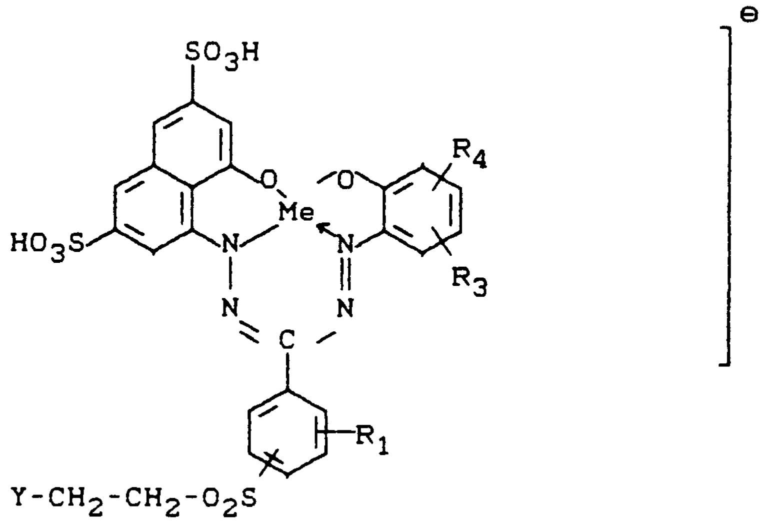

H⊕ VII

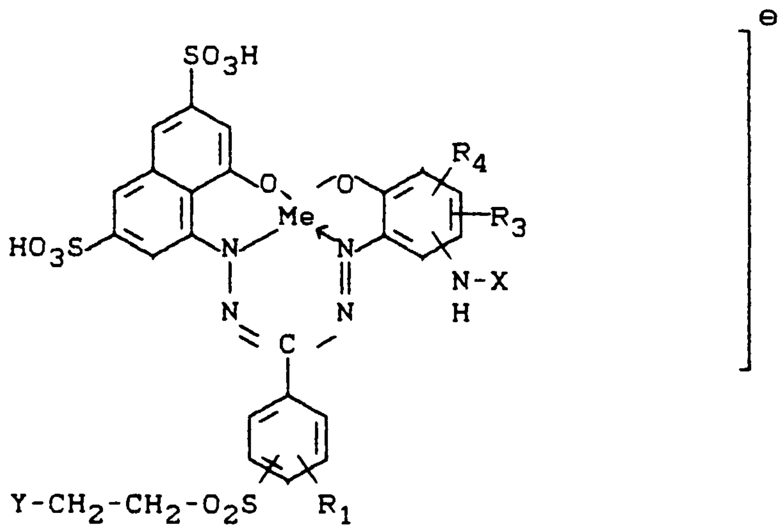

H⊕ VIII

worin
$R_1$, $R_2$, $R_3$ und $R_4$, X, Y und Me die oben genannte Bedeutung haben.

Die Farbstoffe der Formel I erhält man beispielsweise durch Umsetzung eines Hydrazins der Formel

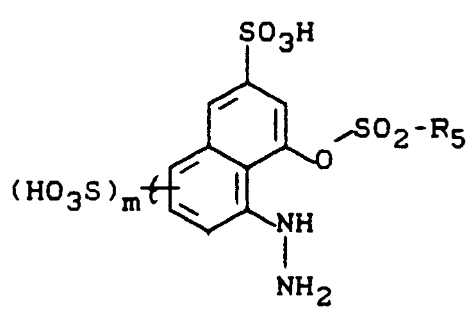

X

worin

$R_5$ = $C_1$-$C_4$-Alkyl oder gegebenenfalls substituiertes Phenyl, insbesondere Methylphenyl, mit einem

Aldehyd oder Dialdehyd der Formel

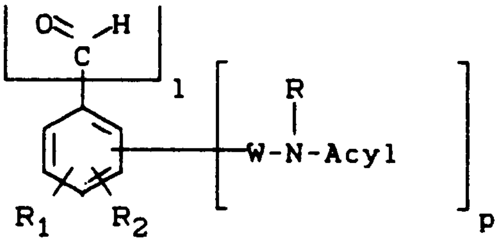

XI

zu Hydrazonen der Formel

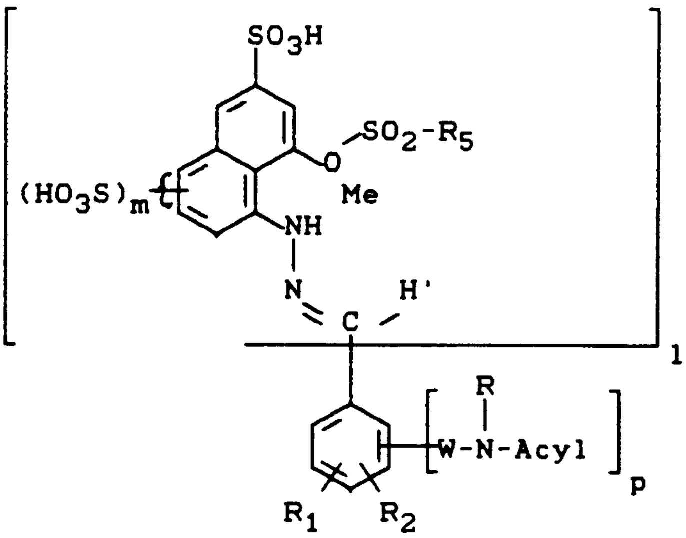

XII

anschließende Kupplung mit einem diazotierten Aminophenol der Formel

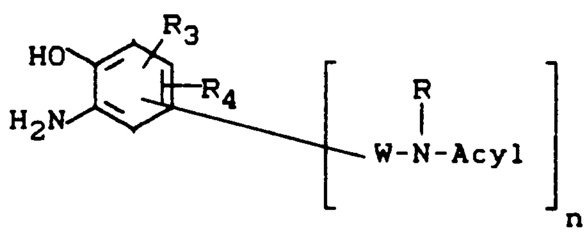

XIII

zu Formazanen der Formel

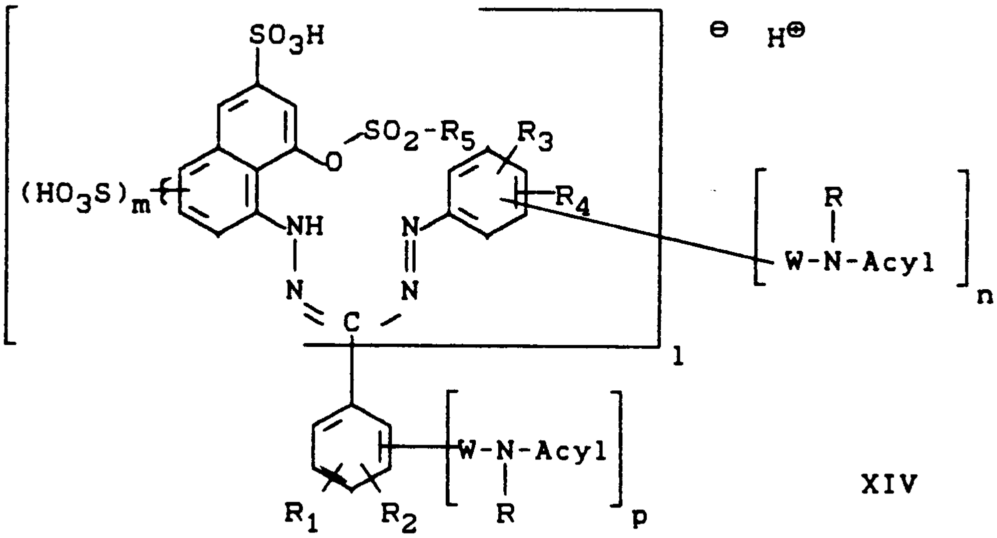

XIV

folgende Verseifung der $-OSO_2R_5$-Gruppe in Gegenwart metallabgebender Mittel und falls erforderlich Abspaltung des Acylrestes unter Bildung von Formazanen der Formel

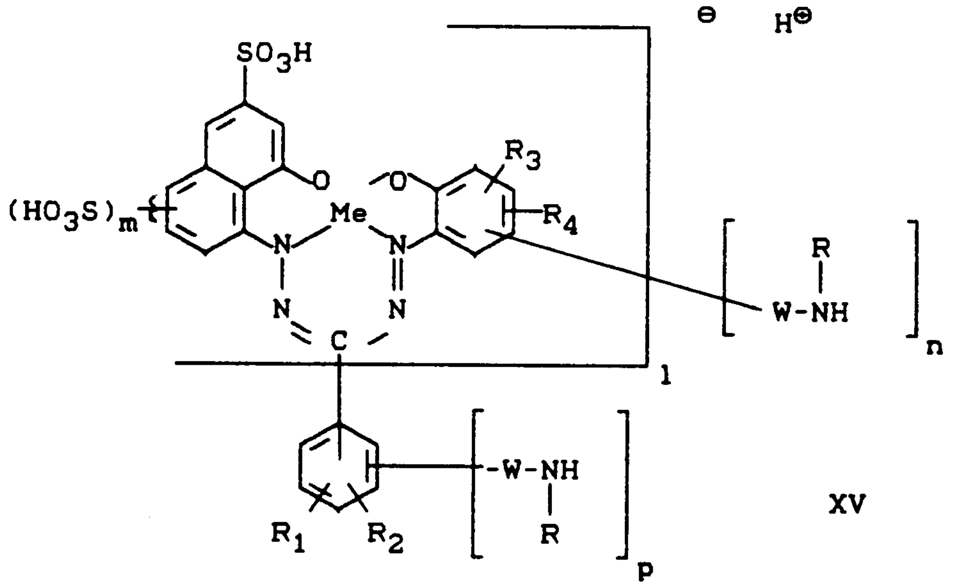

XV

und gegebenenfalls abschließende Umsetzung von Farbstoffen der Formel XV mit Verbindungen X-Halogen, wobei Halogen = F, Cl oder Br, zu Farbstoffen der allgemeinen Formel I, gegebenenfalls nach Einführung der Abgangsgruppe Y in den Resten $R_1$-$R_4$.

Acyl steht dabei vorzugsweise für eine $C_1$-$C_4$-Alkylcarbonylgruppe.

Die Verbindungen X, XII und XIV sind neu und ebenfalls Gegenstand der Erfindung. Man erhält Sie unter Verwendung entsprechender Ausgangsverbindungen analog den in den folgenden Beispielen angegebenen Verfahren.

Geeignete Verbindungen der allgemeinen Formel X sind beispielsweise:

1-Hydrazino-8-(phenylsulfonyloxy)-naphthalin-3,6-disulfonsäure.

1-Hydrazino-8-(phenylsulfonyloxy)-naphthalin-4,6-disulfonsäure sowie die entsprechenden 8-(4-Methylphenylsulfonyloxy)-und 8-Methylsulfonyloxy-Verbindungen.

1-Hydrazino-8-(phenylsulfonyloxy)-naphthalin-6-sulfonsäure.

Geeignete Verbindungen der allgemeinen Formel XI sind beispielsweise:

Benzaldehyd

2- oder 3- oder 4-Chlorbenzaldehyd

2,4- oder 2,6-Dichlorbenzaldehyd
2- oder 3- oder 4-Nitrobenzaldehyd
2- oder 3- oder 4-Acetylaminobenzaldehyd
4-Chlor-3-nitrobenzaldehyd
2-Chlor-5-nitrobenzaldehyd
4-Chlor-3-acetylaminobenzaldehyd
2-Chlor-5-acetylaminobenzaldehyd
2- oder 3- oder 4-Methylbenzaldehyd
2- oder 3- oder 4-Hydroxybenzaldehyd
2- oder 3- oder 4-Methoxybenzaldehyd
2-Hydroxy-3-methoxybenzaldehyd
4-Hydroxy-3-methoxybenzaldehyd
2- oder 3- oder 4-Sulfobenzaldehyd
2,4-Disulfobenzaldehyd
2-Sulfo-4-acetylaminobenzaldehyd
4-Sulfo-3-aminobenzaldehyd
2- oder 3- oder 4-($\beta$-hydroxyethylsulfonyl)-benzaldehyd
Isophthalaldehyd
Terephthalaldehyd.

Geeignete Verbindungen der allgemeinen Formel XIII sind z.B.:

2-Amino-phenol
2-Amino-4-chlorphenol
2-Amino-4,6-dichlorphenol
2-Amino-3,4,6-trichlorphenol
2-Amino-4-nitrophenol
2-Amino-5-nitrophenol
2-Amio-6-chlor-4-nitrophenol
2-Amino-4-chlor-5-nitrophenol
2-Amino-4-chlor-6-nitrophenol
2-Amino-4,6-dinitrophenol
2-Amino-4-acetylaminophenol
2-Amino-6-nitro-4-acetylaminophenol
2-Amino-4-methylphenol
2-Amion-4-methyl-6-nitrophenol
2-Amino-4-(ethylsulfonyl)-phenol
2-Amino-4-($\beta$-hydroxyethylsulfonyl)-phenol
6-Amino-4-chlorphenol-2-sulfonsäure
6-Amino-4-nitrophenol-2-sulfonsäure
6-Amino-4-acetylaminophenol-2-sulfonsäure
6-Aminophenol-3-sulfonsäure
6-Aminophenol-3-sulfonsäureamid
6-Amino-4-chlorphenol-3-sulfonsäure
6-Amino-4-nitrophenol-3-sulfonsäure
2-Aminophenol-4-sulfonsäure
2-Aminophenol-4-sulfonsäureamid
2-Aminophenol-4-sulfonsäuredimethylamid
2-Amino-5-chlorphenol-4-sulfonsäure
2-Amino-6-nitrophenol-4-sulfonsäure
2-Amino-6-acetylaminophenol-4-sulfonsäure
6-Aminophenol-2,4-disulfonsäure
6-Amino-4-methylphenol-2-sulfonsäure
3-Amino-5-sulfosalicylsäure.

Die angegebenen Formeln sind die der freien Säuren. Bei der Herstellung werden im allgemeinen die Salze erhalten, insbesondere die Alkalisalze wie Natrium-, Kalium-oder Lithiumsalze. Die Farbstoffe können auch als konzentrierte Lösungen eingesetzt werden.

Die erfindungsgemäßen Farbstoffe eignen sich hervorragend zum Färben und Bedrucken von natürlichen und synthetischen OH- oder amidgruppenhaltigen Materialien, insbesondere solche aus Cellulose und Polyamiden. Sie sind besonders geeignet zum Färben von Cellulosematerialien in Auszieh- und Klotz-Kaltverweilverfahren.

Man erhält bei gutem Aufbauvermögen und hohen Fixierausbeuten Färbungen mit guten Allgemeinechtheiten, insbesondere Naß- und Lichtechtheiten.

Beispiel 1

665 Teile 8-Amino-1-(phenylsulfonyloxy)-naphthalin-3,6-disulfonsäure werden in 1800 ml Wasser verrührt, mit 300 ml einer 50 %igen Schwefelsäure versetzt und mit 1000 Teilen Eis auf ≦ 5 °C gekühlt. Mit 334 ml einer 30 %igen Natriumnitritlösung wird rasch diazotiert. Während einer kurzen Nachrührzeit fällt das Diazoniumsalz als heller, graugrüner Niederschlag aus.

Diese Suspension wird in eine Vorlage aus 760 ml einer 38 %igen Bisulfit-Lösung, 250 Teilen Eis und 240 ml einer 40 %igen Natronlauge eingegossen, wobei der pH-Wert mit Natronlauge neutral gehalten wird. Man erhält eine Lösung, die auf 80-90 °C erhitzt wird und anschließend mit 1900 ml einer 50 %igen Schwefelsäure versetzt wird. Während einer einstündigen Nachrührzeit bei > 95 °C bildet sich ein kristalliner Niederschlag. Es wird kaltgerührt, der Niederschlag abgesaugt und getrocknet. Man erhält ca. 620 Teile eines schwach rosa gefärbten Produktes, das in Form der freien Säure folgender Formel entspricht:

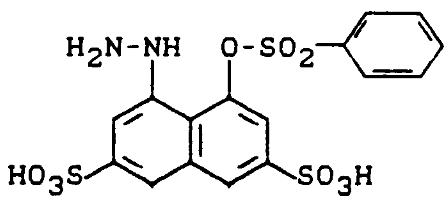

Analog lassen sich die Verbindungen X herstellen.

| Analyse: | | |
|---|---|---|
| | C | N |
| ber.<br>gef. | 40,5 %<br>40,5 % | 5,9 %<br>5,7 % |

Beispiel 2

620 Teile 8-Hydrazino-1-(phenylsulfonyloxy)-naphthalin-3,6-disulfonsäure(aus Beispiel 1) werden in 700 ml Wasser verrührt und mit 35 ml einer 40 %igen Natronlauge auf pH 5 gestellt. Nach Zugabe von 106 Teilen Benzaldehyd wird 2 Stunden gerührt, wobei der pH Wert mit Natronlauge konstant gehalten wird. Man erhält eine Lösung eines gelben Hydrazons, welches in Form der freien Säure folgender Formel entspricht:

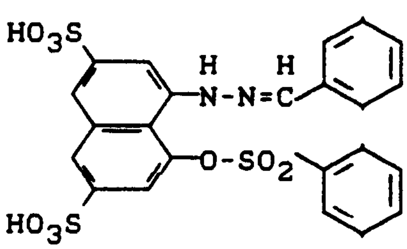

$\lambda_{max}$ = 378 nm

Beispiel 3

250 Teile 2-Amino-6-acetylaminophenol-4-sulfonsäure werden in 1000 Teilen Wasser verrührt und

nacheinander mit 1000 Teilen Eis, 235 ml einer 30 %igen Natriumnitritlösung und 1380 ml einer 18 %igen wäßrigen Kupfersulfatlösung versetzt. Diese kupferhaltige Diazotierung wird zu der in Beispiel 2 beschriebenen Lösung des Hydrazons gegeben und durch Zusatz von 275 ml einer 40 %igen Natronlauge pH 11 eingestellt und gehalten. Anschließend wird auf 70 °C erhitzt und zur Verseifung des Phenylsulfonylesters ca. 30 Minuten bei pH 11 gerührt. Zur Verseifung der Acetylaminogruppe werden weitere 10 Volumen % eienr 40 %igen Natronlauge zugesetzt und 4 Stunden bei 95 °C gerührt. Die Lösung wird heiß mit Natriumchlorid gesättigt, mit Salzsäure auf pH 7 gestellt und kaltgerührt. Die nach Filtration erhaltene Farbbase wird in 1700 ml Wasser gelöst und bei pH 6,5 und 30 °C mit 170 Teilen 2,4,6-Trifluor-5-chlorpyrimidin kondensiert.

Dabei wird der pH-Wert mit einer Alkali-bicarbonat, -carbonat oder -hydroxid-Lösung konstant gehalten. Nach ca. 1 Stunde wird der entstandene Reaktivfarbstoff ausgesalzen, abfiltriert und getrocknet.

Man erhält ein schwarzes Produkt, das in Form der freien Säure folgender Formel entspricht

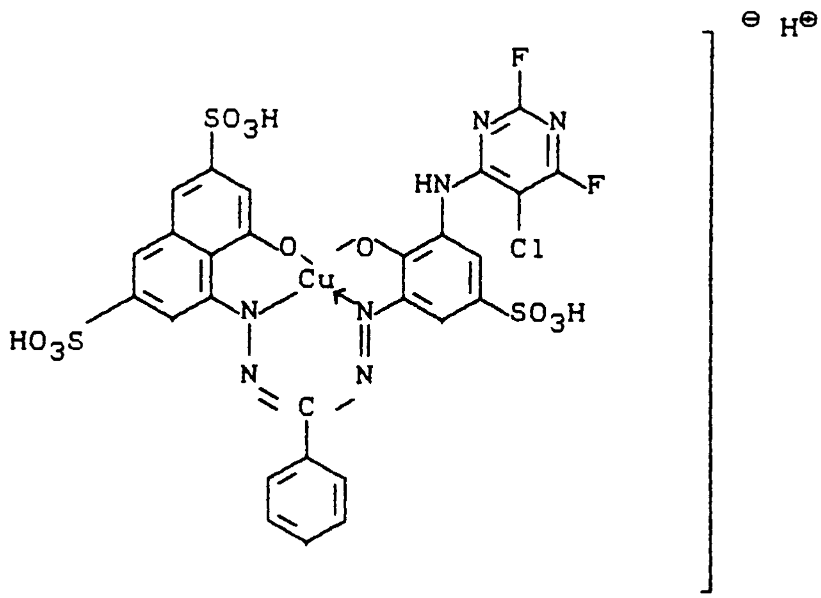

$\lambda_{max}$: 656 nm

Der Farbstoff löst sich in Wasser mit blauschwarzer Farbe und liefert auf Cellulose-Materialien graue Färbungen und Drucke von sehr hohen Echtheiten, insbesondere hohen Chlor- und Lichtechtheiten.

Ersetzt man in Beispiel 3 die Kupfersulfatlösung durch die äquivalente Menge an Nickelsulfatlösung und verfährt im übrigen nach den Angaben aus Beispiel 3, so erhält man ein Produkt, das in Form der freien Säure folgender Formel entspricht:

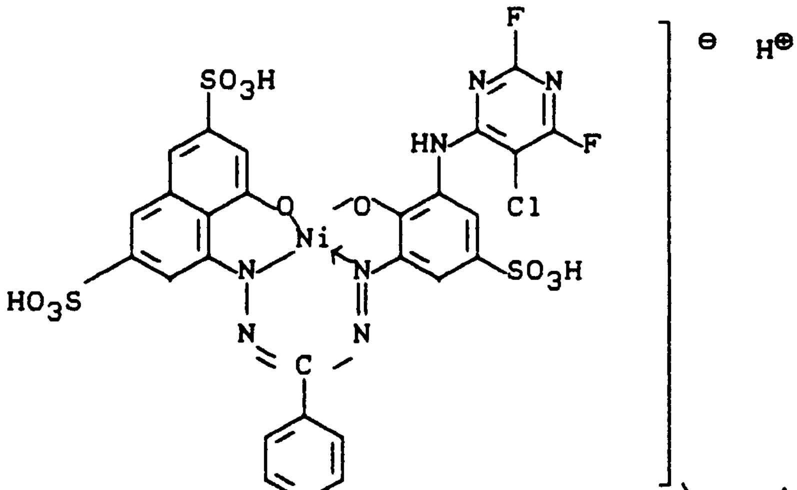

$\lambda_{max}$ :494 nm (breit)

Der Farbstoff löst sich in Wasser mit dunkelbrauner Farbe und liefert auf Cellulose-Materialien braune Färbungen und Drucke.

Man erhält weitere interessante Farbstoffe, wenn man das Hydrazin aus Beispiel 1 mit den in Tabelle I, Kolonne 1 angegebenen Aldehyden zu Hydrazonen kondensiert, die 2-Aminophenol-Komponente aus Kolonne 2, Tabelle I diazotiert und in Anwesenheit eines Metallsalzes aus Kolonne 3, Tabelle I kuppelt, den Phenylsulfonylester und die Acylaminogruppe(n) verseift und anschließend mit Reaktivsystemen X-Halogen aus Kolonne 4, Tabelle I kondensiert. Die so erhaltenen Reaktivfarbstoffe liefern auf Cellulose-Materialien Färbungen und Drucke mit den in Kolonne 5, Tabelle I angegebenen Farbtönen und den in Kolonne 6, Tabelle I angegebenen physikalischen Daten.

Tabelle I

| Bsp. | Aldehyd | 2-Aminophenol-Komponente | Me | X-Halogen | Farbton | $\lambda_{max}$ [nm] |
|---|---|---|---|---|---|---|
| 4 | 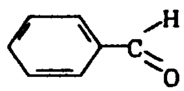 | 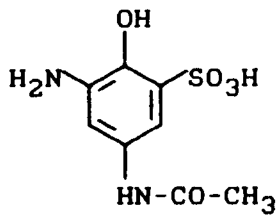 | Cu | 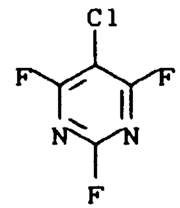 | grau | 655 |
| 5 | " | " | " | 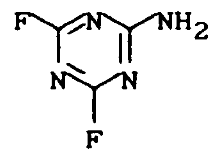 | " | " |
| 6 | " | " | " | 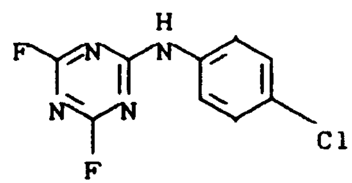 | " | " |
| 7 | 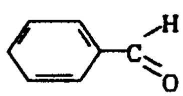 | 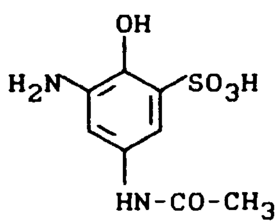 | Cu | 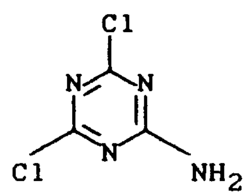 | " | " |

Tabelle I (Fortsetzung)

| Bsp. | Aldehyd | 2-Aminophenol-Komponente | Me | X-Halogen | Farbton | $\lambda_{max}$ [nm] |
|---|---|---|---|---|---|---|
| 8 | 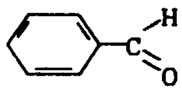 | 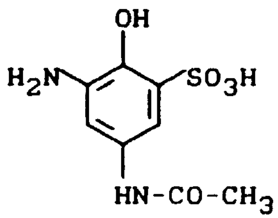 | Cu | 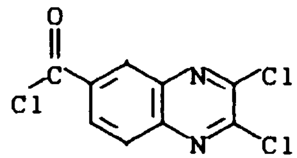 | grau | 655 |
| 9 | " | 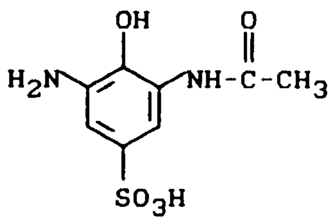 | " | 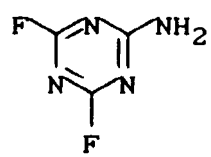 | " | 656 |
| 10 | " | " | " | 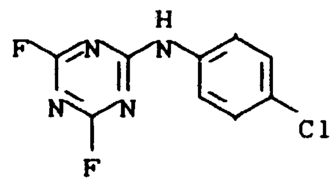 | " | " |
| 11 | 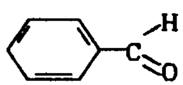 | 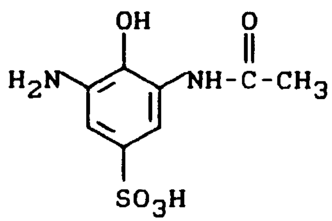 | Cu | 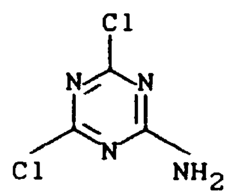 | " | " |

Tabelle I (Fortsetzung)

| Bsp. | Aldehyd | 2-Aminophenol-Komponente | Me | X-Halogen | Farbton | $\lambda_{max}$ [nm] |
|---|---|---|---|---|---|---|
| 12 | 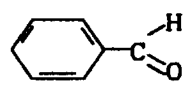 | 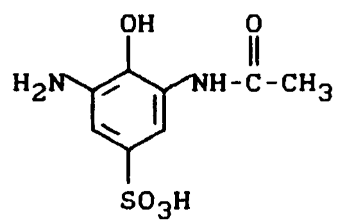 | Cu | 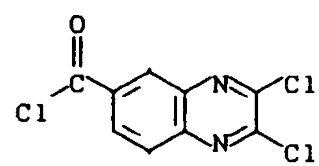 | grau | 656 |
| 13 | " | " | " | 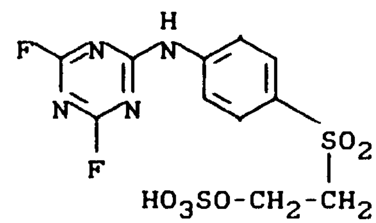 | " | " |
| 14 | " | 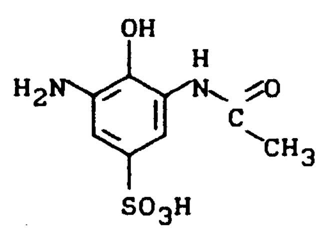 | " | 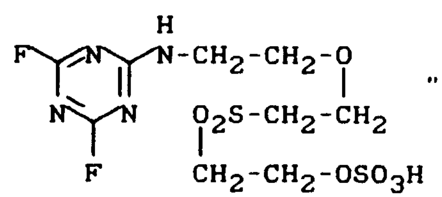 | " | " |

Tabelle I (Fortsetzung)

| Bsp. | Aldehyd | 2-Aminophenol-Komponente | Me | X-Halogen | Farbton | $\lambda_{max}$ [nm] |
|---|---|---|---|---|---|---|
| 15 | 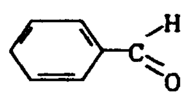 | 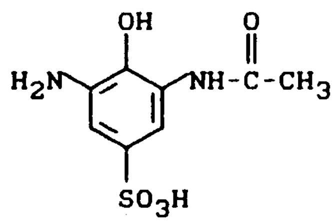 | Cu | 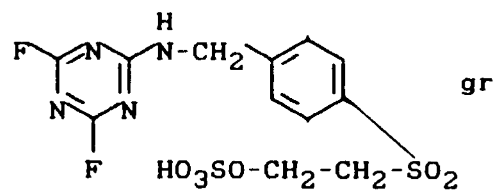 | grau | 656 |
| 16 | " | " | Cu | 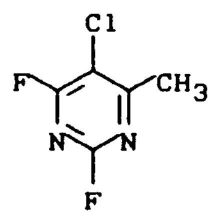 | " | " |
| 17 | " | " | Cu | 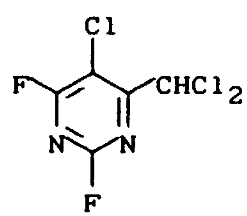 | " | " |

<u>Tabelle I</u> (Fortsetzung)

| Bsp. | Aldehyd | 2-Aminophenol-Komponente | Me | X-Halogen | Farbton | $\lambda_{max}$ [nm] |
|---|---|---|---|---|---|---|
| 18 | 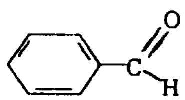 | 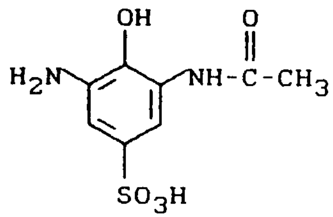 | Cu | 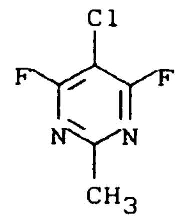 | grau | 656 |
| 19 | 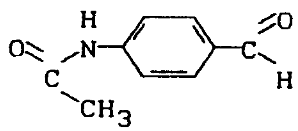 | 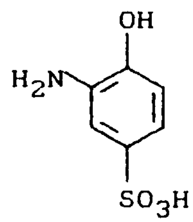 | Cu | 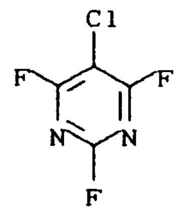 | graugrün | |
| 20 | " | 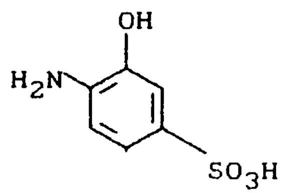 | " | " | " | |
| 21 | 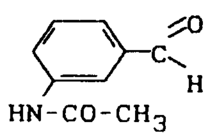 | " | " | " | " | |

Tabelle I (Fortsetzung)

| Bsp. | Aldehyd | 2-Aminophenol-Komponente | Me | X-Halogen | Farbton |
|---|---|---|---|---|---|
| 22 | 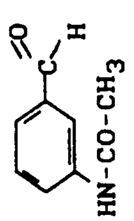 | 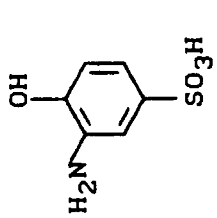 | Cu | 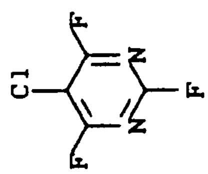 | graugrün |
| 23 | 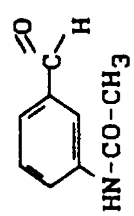 | 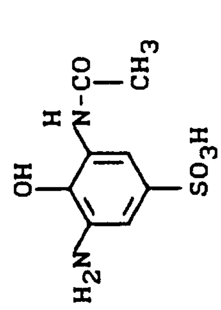 | " | " | " |

Beispiel 24

Ersetzt man in Beispiel 3 die 2-Amino-6-acetylaminophenol-4-sulfonsäure durch die äquivalente Menge 2-Amino-4-($\beta$-hydroxyethylsulfonyl)-phenol, diazotiert und kuppelt auf das in Beispiel 2 beschriebene Hydrazon nach den Bedingungen aus Beispiel 3 so erhält man nach Sulfatierung gemäß DE-A 1 443 877 durch Einwirkung von Amidosulfonsäure in Gegenwart organischer Lösungsmittel bei erhöhter Temperatur einen Farbstoff, der in Form der freien Säure der folgenden Formel entspricht

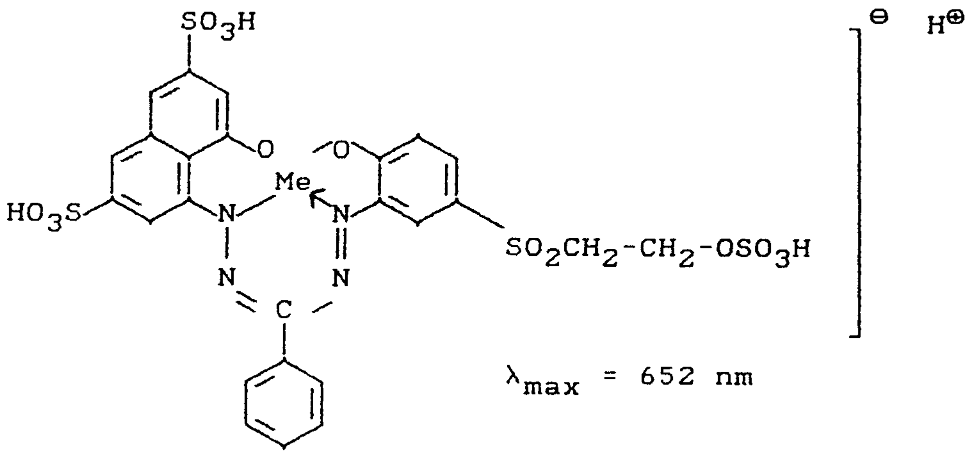

$\lambda_{max}$ = 652 nm

Man erhält weitere interessante Farbstoffe, wenn man das Hydrazin aus Beispiel 1 mit den in Tabelle II Kolonne 1 angegebenen Aldehyden zu Hydrazonen kondensiert, die 2-Aminophenolkomponenten aus Kolonne 2, Tabelle II diazotiert und in Anwesenheit eines Metallsalzes aus Kolonne 3, Tabelle II kuppelt, den Phenylsulfonylester verseift und anschließend sulfatiert gemäß DE-A-1 443 877.

Die so erhaltenen Reaktivfarbstoffe liefern auf Cellulose-Materialien Färbungen und Drucke mit den in Kolonne 4, Tabelle II angegebenen Farbtönen.

<u>Tabelle II</u>

| Bsp. | Aldehyd | 2-Aminophenol-Komponente | Me | Farbton |
|---|---|---|---|---|
| 25 | 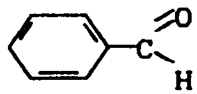 | 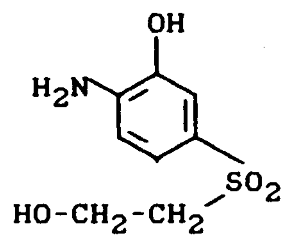 | Cu | Schwarz |
| 26 | 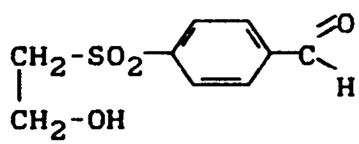 | 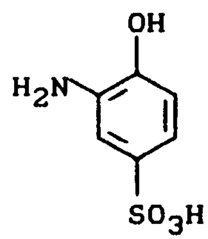 | Cu | grau |
| 27 | " | 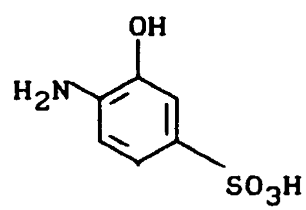 | Cu | " |

**Tabelle II (Fortsetzung)**

| Bsp. | Aldehyd | 2-Aminophenol-Komponente | Me | Farbton |
|---|---|---|---|---|
| 28 | 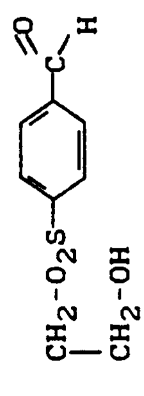 | 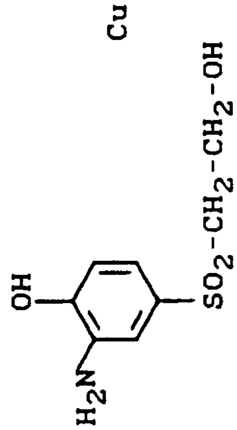 | Cu | schwarz |
| 29 | " | 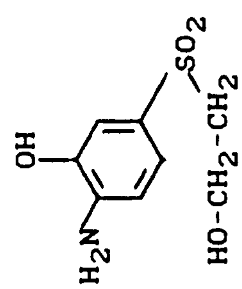 | " | " |

Man erhält weitere interessante Farbstoffe, wenn man das Hydrazin aus Beispiel 1 mit den in Tabelle III, Kolonne 1 angegebenen Aldehyden zu Hydrazonen kondensiert, die 2-Aminophenol-Komponenten aus Kolonne 2, Tabelle III diazotiert und in Anwesenheit eines Metallsalzes aus Kolonne 3, Tabelle III kuppelt, den Phenylsulfonylester und die Acylaminogruppe verseift, anschließend sulfatiert wie in Beispiel 24 angegeben und abschließend mit Reaktivsystemen X-Halogen aus Kolonne 4, Tabelle III kondensiert.

Die so erhaltenen Reaktivfarbstoffe liefern auf Cellulose-Materialien hochechte Färbungen und Drucke

mit den in Kolonne 5, Tabelle III angegebenen Farbtönen.

Tabelle III

| Bsp. | Aldehyd | 2-Aminophenol-Komponente | Me | X-Halogen | Farbton |
|---|---|---|---|---|---|
| 30 | 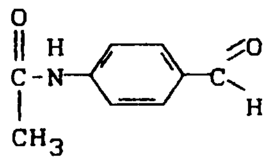 | 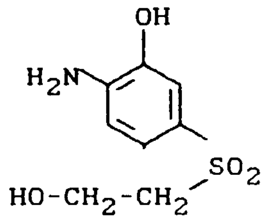 | Cu | 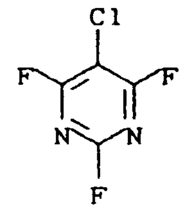 | graugrün |
| 31 | 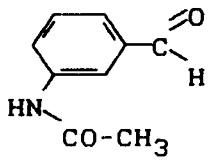 | 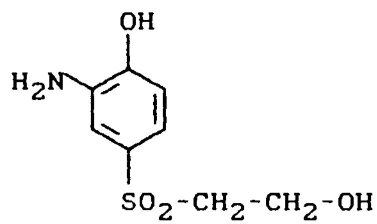 | Cu | " | " |
| 32 | 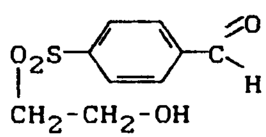 | 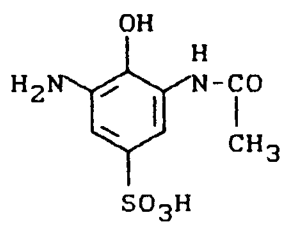 | Cu | " | grau |

Tabelle III (Fortsetzung)

| Bsp. | Aldehyd | 2-Aminophenol-Komponente | Me | X-Halogen | Farbton |
|---|---|---|---|---|---|
| 33 | 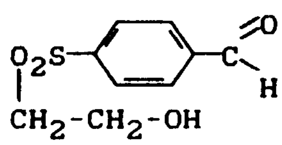 | 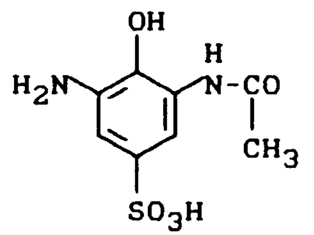 | Cu | 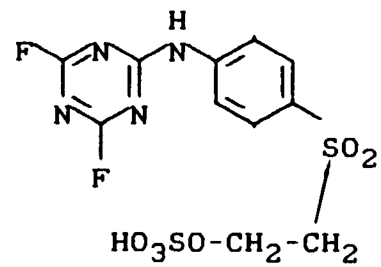 | schwarz |
| 34 | 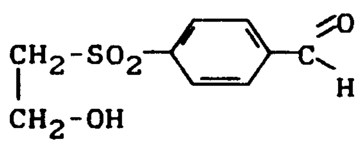 | 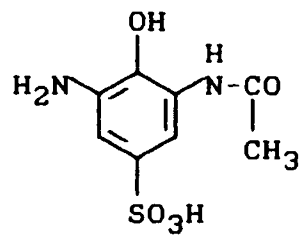 | Cu | 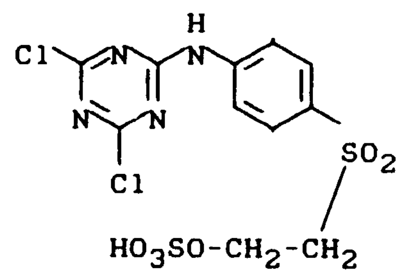 | schwarz |
| 35 | " | 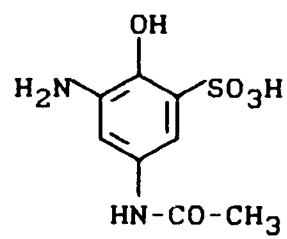 | Cu | " | " |

Tabelle III (Fortsetzung)

| Bsp. | Aldehyd | 2-Aminophenol-Komponente | Me | X-Halogen | Farbton |
|---|---|---|---|---|---|
| 36 | 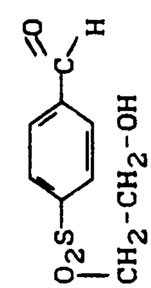 | 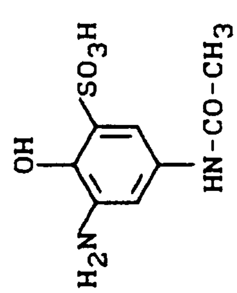 | Cu | 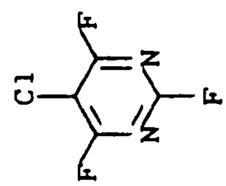 | schwarz |

Beispiel 37

Ersetzt man in Beispiel 2 den Benzaldehyd durch die äquivalente Menge an Terephthalaldehyd und verfährt weiter nach den Angaben aus Beispiel 3, so erhält man ein Produkt, das in Form der freien Säure

folgender Formel entspricht

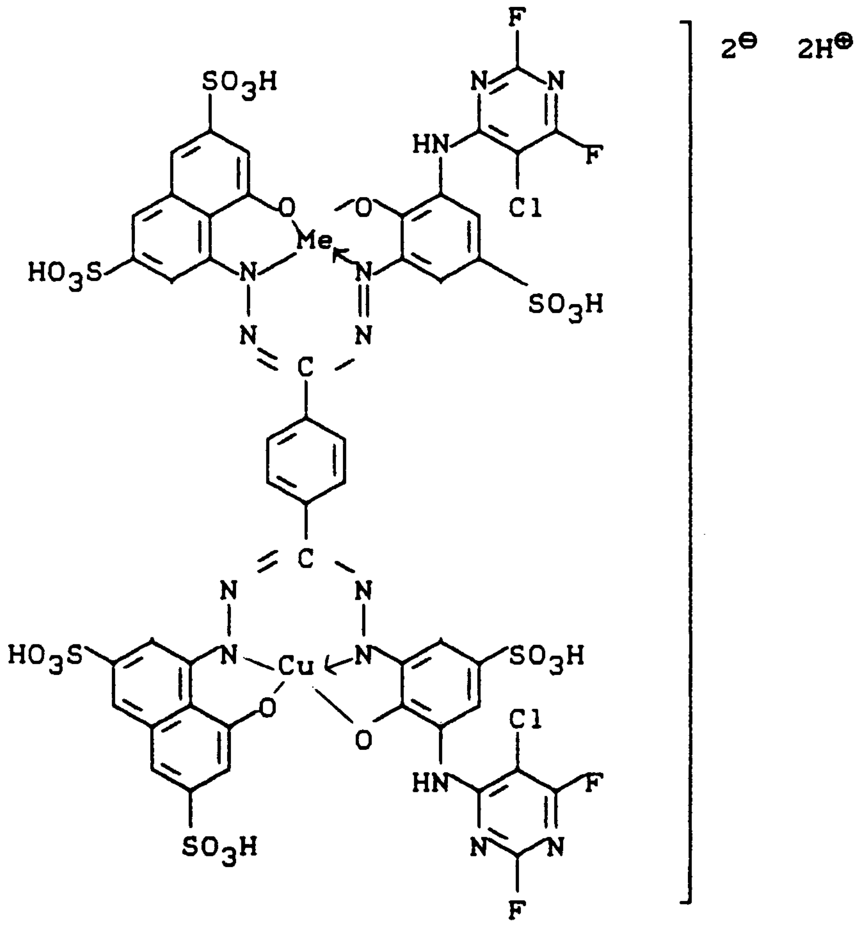

Der Farbstoff löst sich in Wasser mit grüner Farbe und liefert auf Cellulose-Materialien grüne Färbungen und Drucke.

## Patentansprüche

**1.** Reaktivfarbstoffe die in Form der freien Säure der Formel

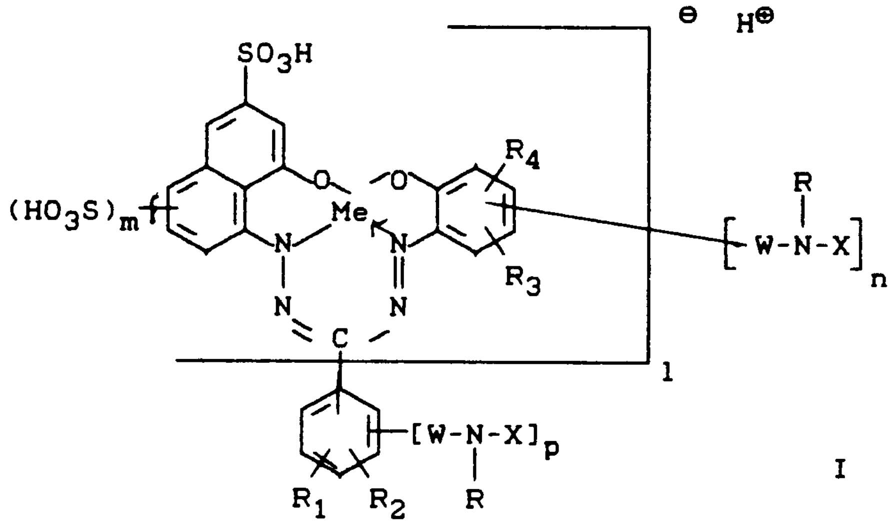

I

entsprechen, worin

| | |
|---|---|
| $R_1$ bis $R_4$ | unabhängig voneinander Wasserstoff, $C_1$-$C_4$-Alkyl, $C_1$-$C_4$-Alkoxy, Hydroxy, Halogen, Carboxy, Sulfonamido, Nitro, Alkyl- oder Arylcarbonylamino-oder -sulfonylamino, $-SO_3H$, $SO_2$-$CH_2$-$CH_2OH$, $SO_2$-$CH=CH_2$, $SO_2$-$CH_2$-$CH_2$-Y, worin |
| Y | ein unter alkalischen Bedingungen abspaltbarer Rest, |
| W | direkte Bindung oder ein Brückenglied zu einem C-Atom der Benzolkerne |
| R | Wasserstoff, $C_1$-$C_4$-Alkyl, die gegebenenfalls mit OH, $OSO_3H$, $SO_3H$ oder COOH substituiert sind |
| X | faserreaktiver Rest |
| l | 1 oder 2 |
| m | 0 oder 1 |
| n | 0 oder 1 |
| p | 0 oder 1 |
| Me | zweiwertiges Metallatom, beispielsweise Fe, Cu, Zn, Co, Ni vorzugsweise Cu, |

wobei für den Fall, daß n + p = 0 mindestens einer der Reste $R_1$-$R_4$ für $-SO_2$-$CH=CH_2$ oder $-SO_2CH_2CH_2Y$ steht.

**2.** Farbstoffe des Anspruchs 1 der Formeln

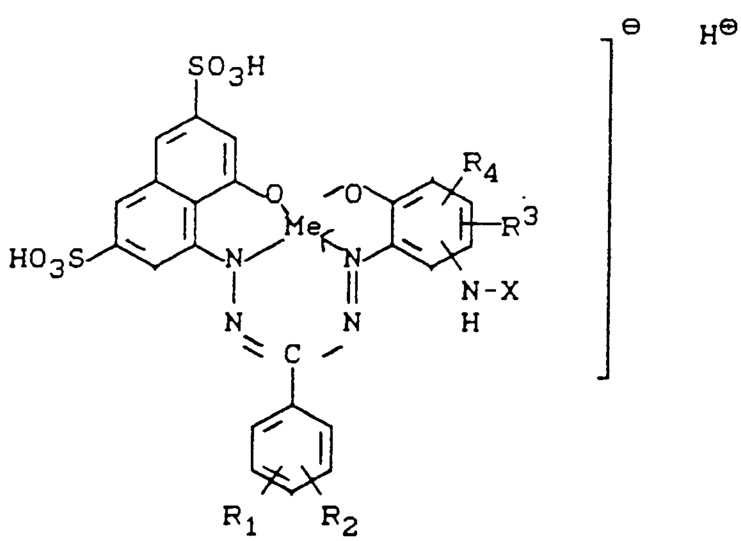

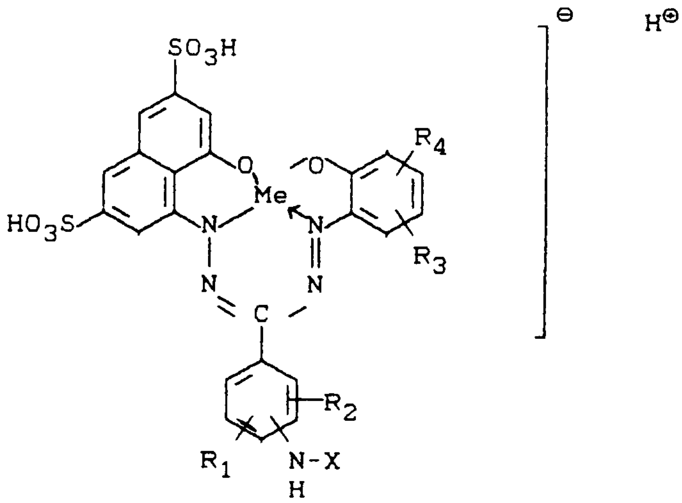

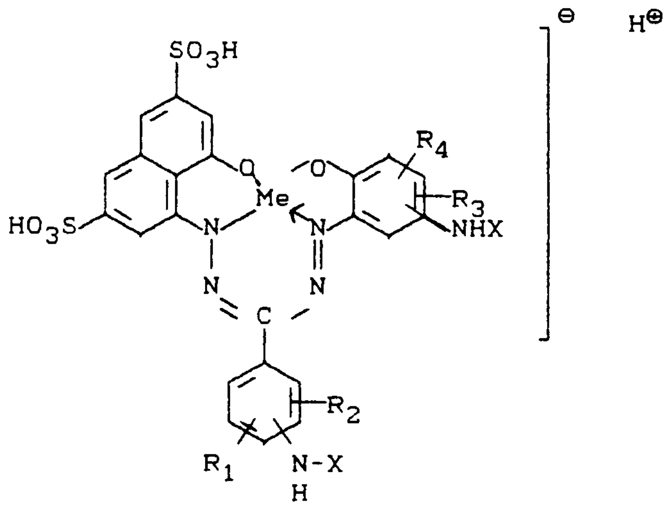

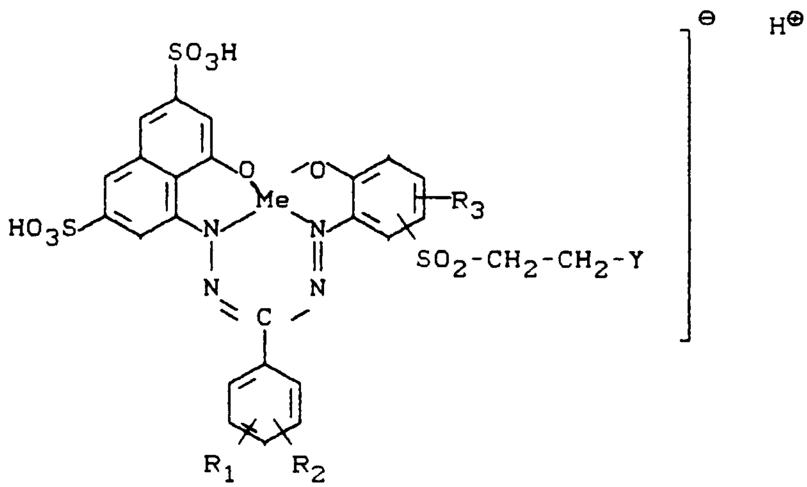

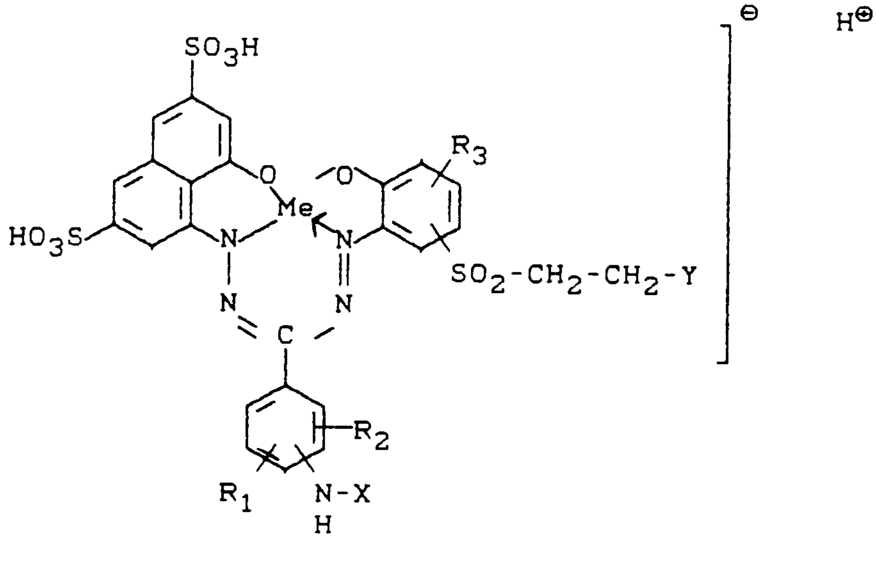

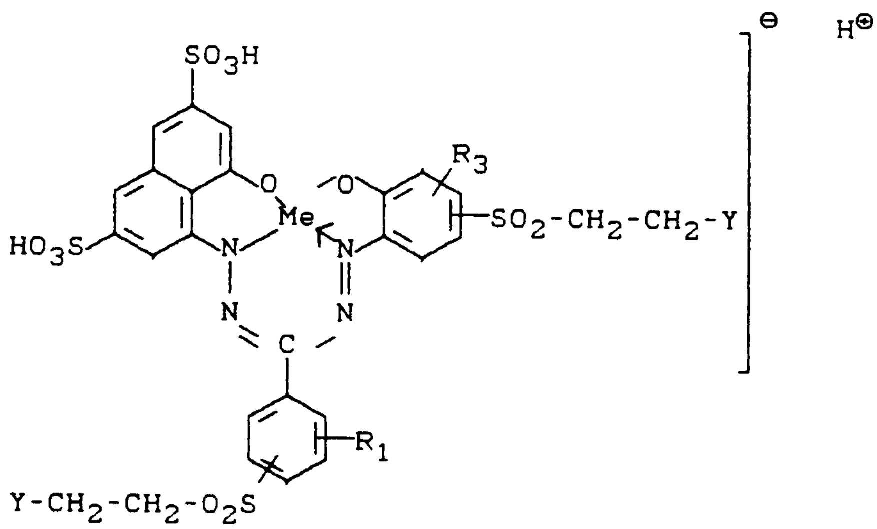

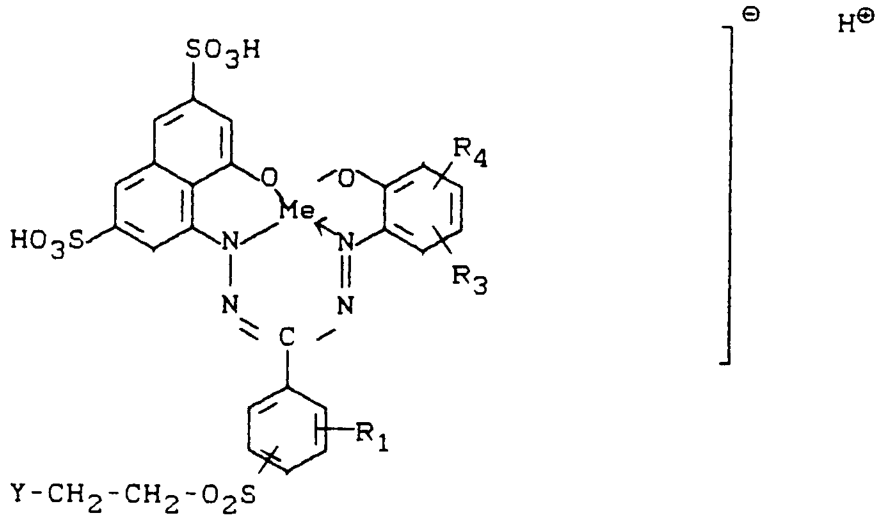

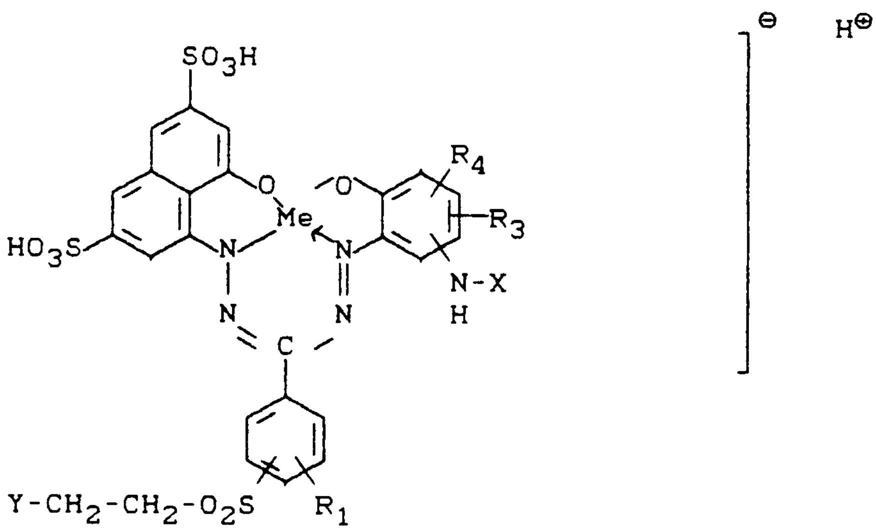

worin

$R_1$, $R_2$, $R_3$ und $R_4$, X, Y und Me die in Anspruch 1 genannte Bedeutung haben.

**3.** Verwendung der Farbstoffe der Ansprüche 1 und 2 zum Färben und Bedrucken von OH- und NH-Gruppen enthaltenden Materialien.

**4.** Mit den Farbstoffen der Ansprüche 1 und 2 gefärbte oder bedruckte OH- und NH-Gruppen enthaltende Materialien.

**5.** Verbindungen die in Form der freien Säure der Formel

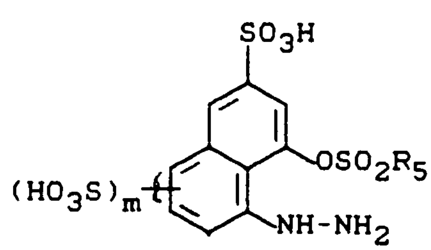

entsprechen, worin

m = 0 oder 1

$R_5$ = $C_1$-$C_4$-Alkyl oder gegebenenfalls substituiertes Phenyl.

## Claims

**1.** Reactive dyestuffs which, in the form of the free acid, have the formula

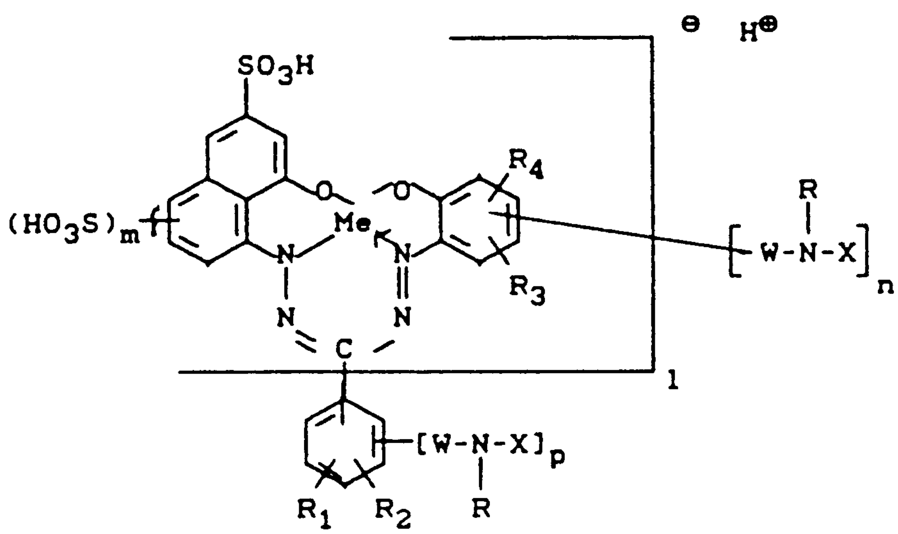

I

in which

$R_1$ to $R_4$, independently of one another, denote hydrogen, $C_1$-$C_4$-alkyl, $C_1$-$C_4$-alkoxy, hydroxyl, halogen, carboxyl, sulphonamido, nitro, alkyl- or arylcarbonylamino or -sulphonylamino, $-SO_3H$, $SO_2$-$CH_2$-$CH_2OH$, $SO_2$-$CH=CH_2$, $SO_2$-$CH_2$-$CH_2$-Y, in which

Y denotes a radical which can be eliminated under alkaline conditions,

W denotes a direct bond or a bridging member to a C atom of the benzene rings

R denotes hydrogen, $C_1$-$C_4$-alkyl, which is unsubstituted or substituted by OH, $OSO_3H$, $SO_3H$ or COOH,

X denotes a fibre-reactive radical

l denotes 1 or 2

m denotes 0 or 1

n denotes 0 or 1

p denotes 0 or 1

Me denotes a divalent metal atom, for example Fe, Cu, Zn, Co, Ni, preferably Cu,

and in which in the case where n + p = 0 at least one of the radicals $R_1$-$R_4$ represents $-SO_2$-$CH=CH_2$ or $-SO_2CH_2CH_2Y$.

**2.** Dyestuffs of Claim 1 of the formulae

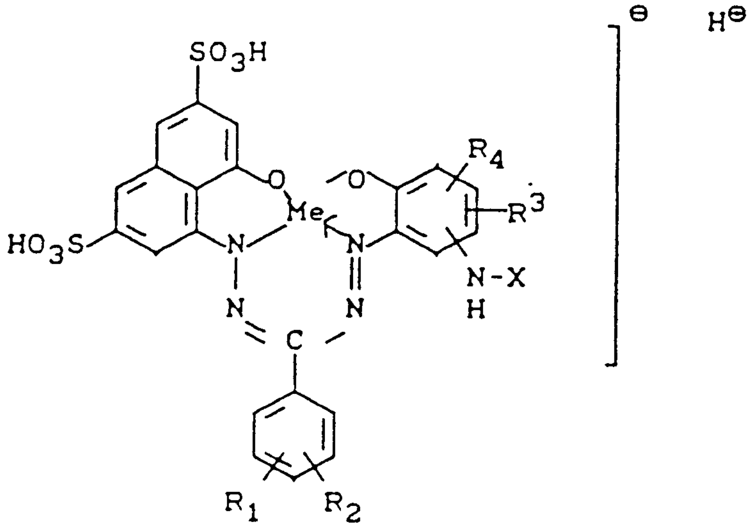

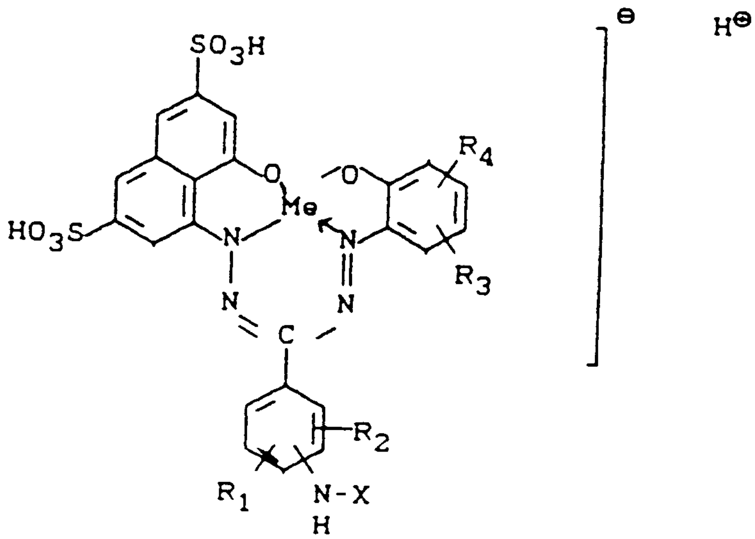

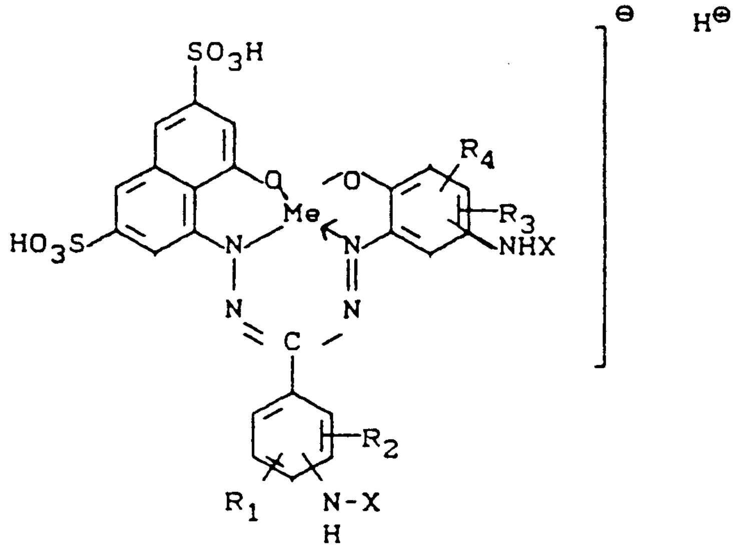

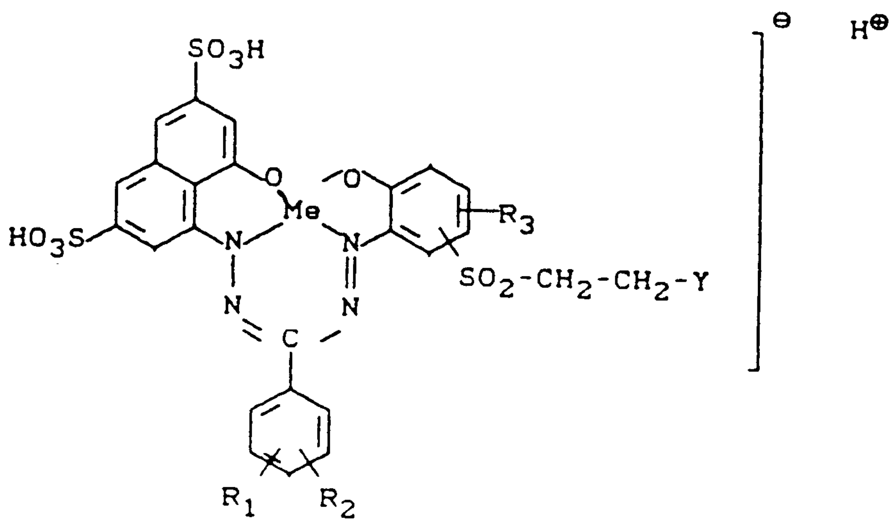

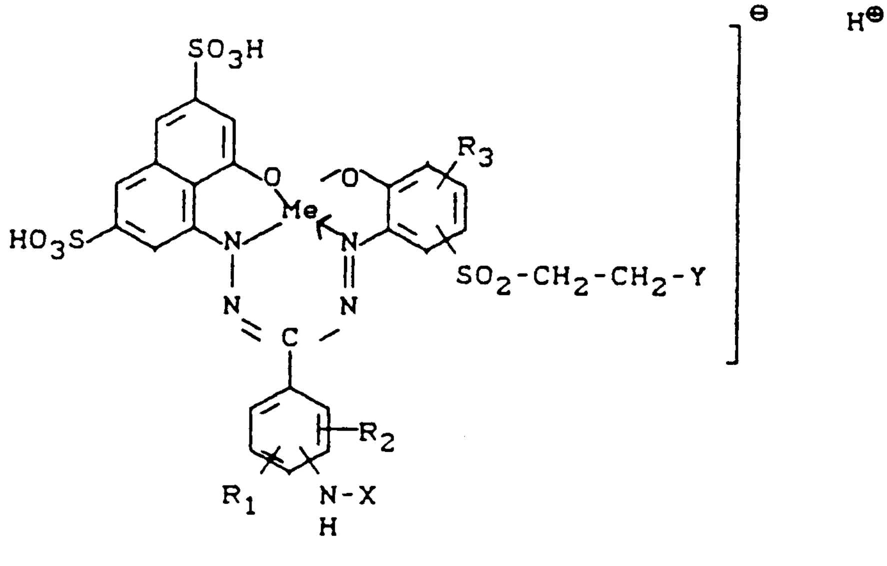

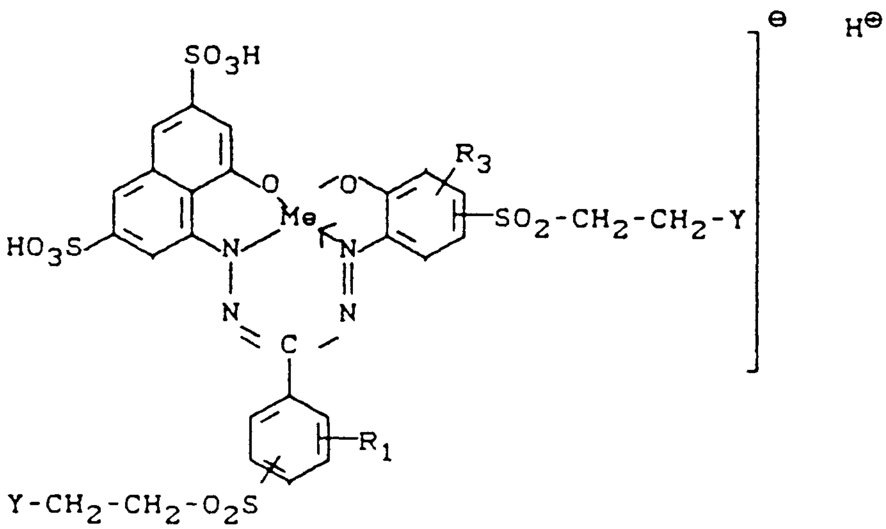

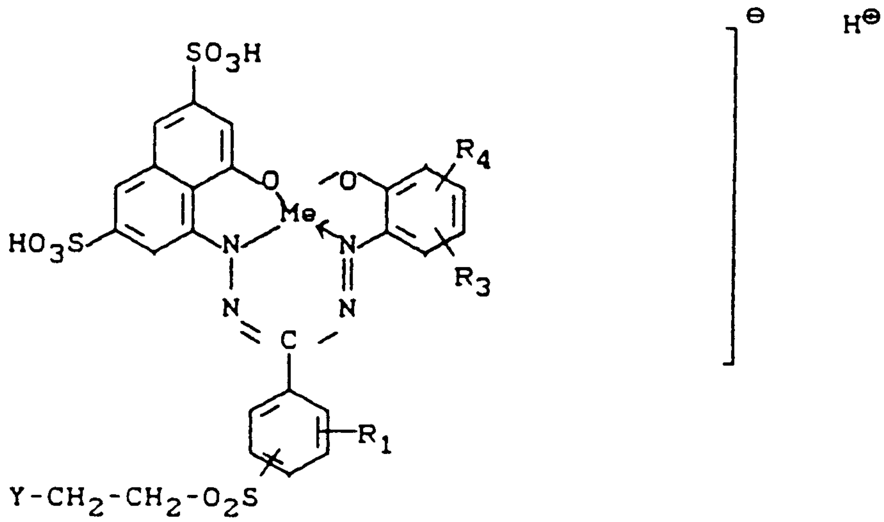

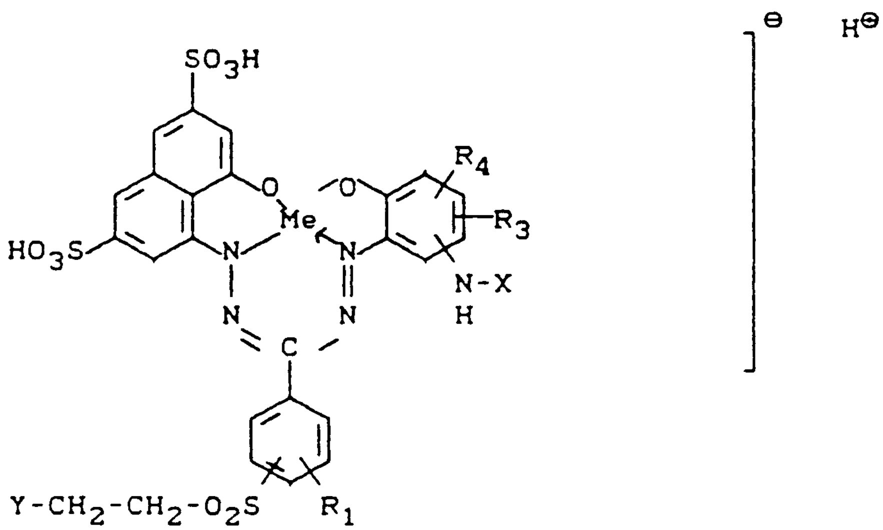

in which
$R_1$, $R_2$, $R_3$ and $R_4$, X, Y and Me have the meaning given in Claim 1.

3. Use of the dyestuffs of Claims 1 and 2 for the dyeing and printing of materials containing OH and NH groups.

4. Materials containing OH and NH groups and dyed or printed with the dyestuffs of Claims 1 and 2.

5. Compounds which, in the form of the free acid, have the formula

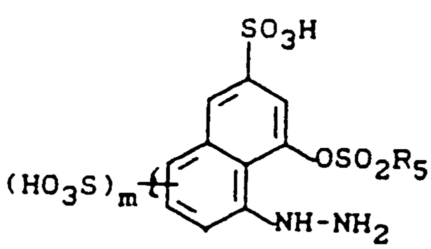

in which
m is 0 or 1
$R_5$ is $C_1$-$C_4$-alkyl or substituted or unsubstituted phenyl.

## Revendications

**1.** Colorants réactifs qui, à l'état d'acides libres, répondent à la formule

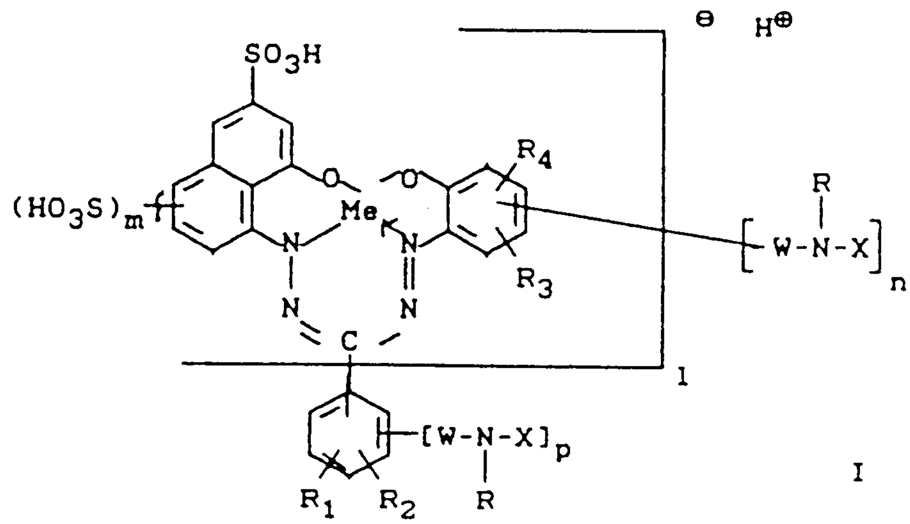

I

dans laquelle

$R_1$ à $R_4$ représentent chacun, indépendamment les uns des autres, l'hydrogène, un groupe alkyle en $C_1$-$C_4$, alcoxy en $C_1$-$C_4$, hydroxy, un halogène, un groupe carboxy, sulfonamido, nitro, alkyl- ou aryl-carbonylamino ou -sulfonylamino, $-SO_3H$, $SO_2$-$CH_2$-$CH_2OH$, $SO_2$-$CH=CH_2$, $SO_2$-$CH_2$-$CH_2$-Y dans lequel

Y représente un substituant éliminable en milieu alcalin,

W représente une liaison directe ou un pont vers un atome de carbone des noyaux benzéniques,

R représente l'hydrogène, un groupe alkyle en $C_1$-$C_4$,éventuellement substitué par OH, $OSO_3H$, $SO_3H$ ou COOH,

X représente un groupe réactif avec les fibres,

l est égal à 1 ou 2,

m est égal à 0 ou 1,

n est égal à 0 ou 1,

p est égal à 0 ou 1,

Me représente un atome de métal divalent, par exemple Fe, Cu, Zn, Co, Ni, de préférence Cu,

l'un au moins des symboles $R_1$ à $R_4$ représentant $-SO_2$-$CH=CH_2$ ou $-SO_2CH_2CH_2Y$ lorsque n + p = 0.

**2.** Colorants de la revendication 1, répondant aux formules

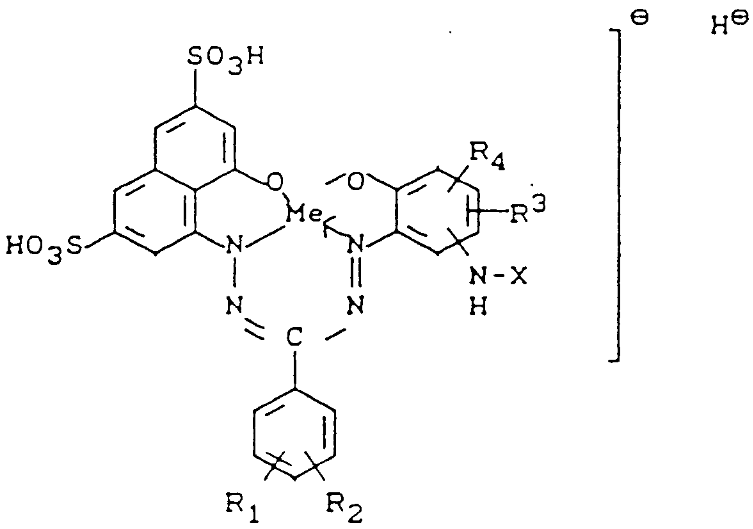

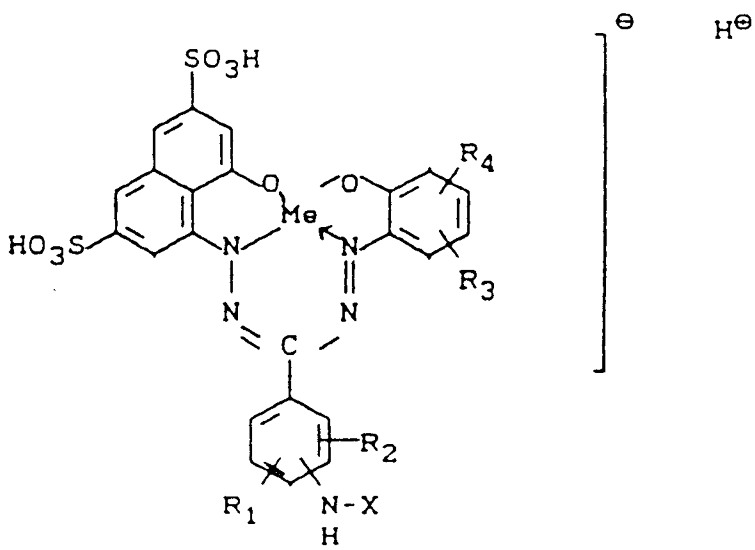

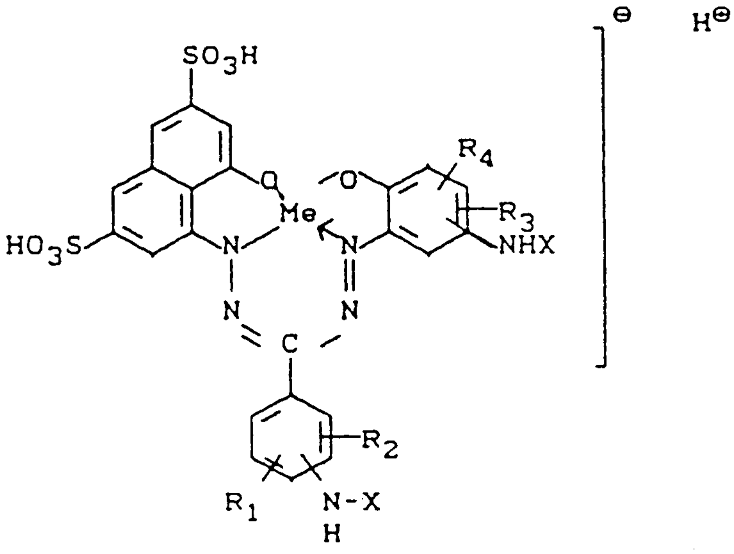

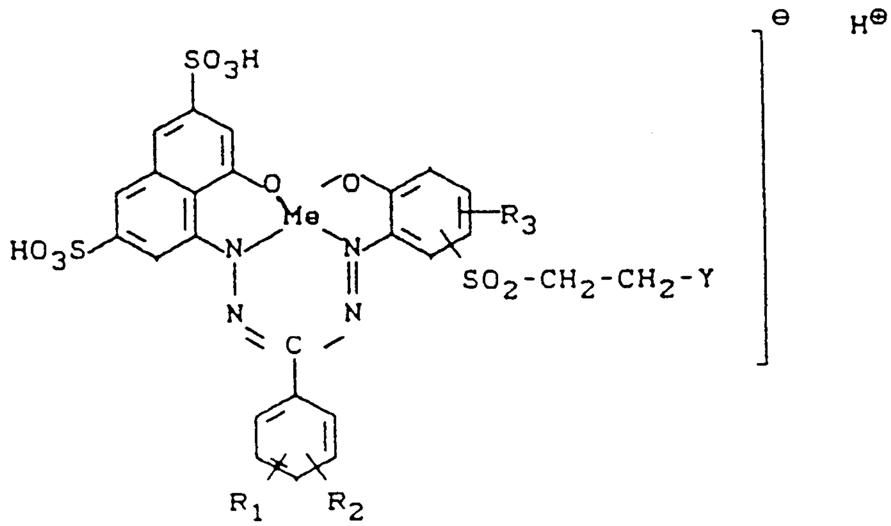

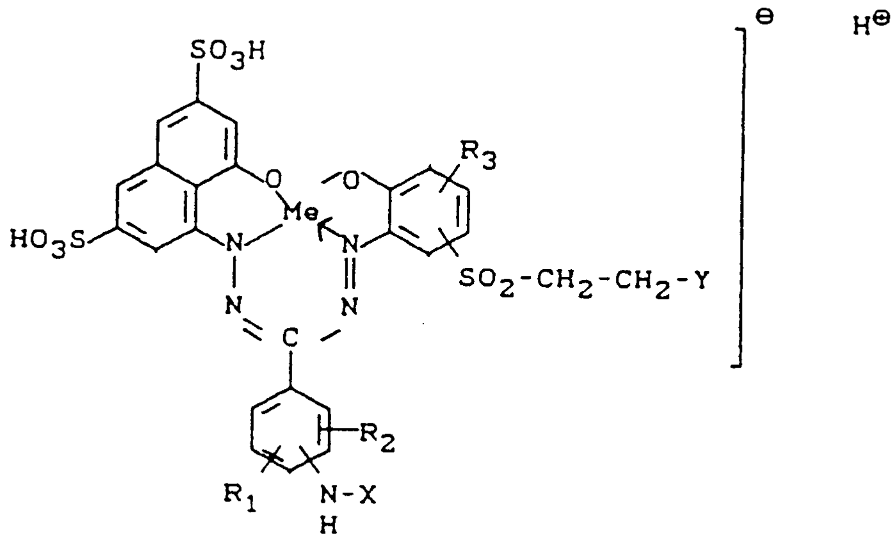

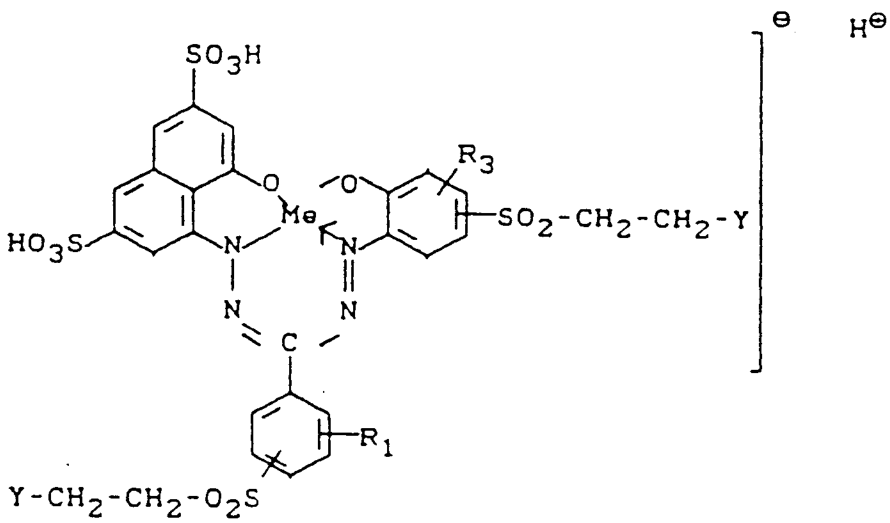

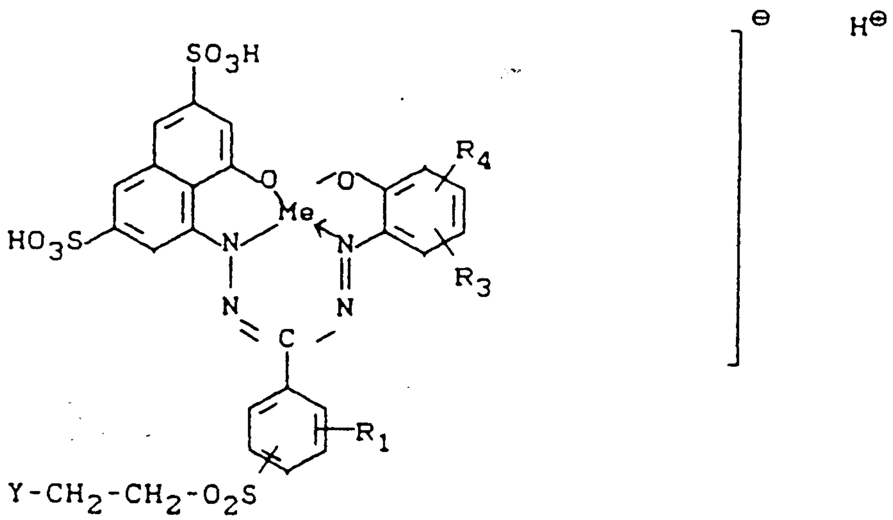

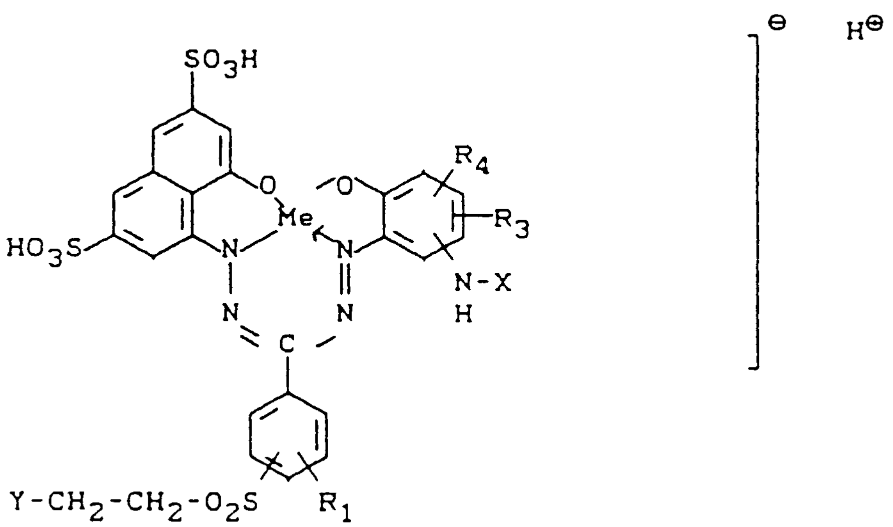

dans lesquelles

$R_1$, $R_2$, $R_3$ et $R_4$, X, Y et Me ont les significations indiquées dans la revendication 1.

3. Utilisation des colorants des revendications 1 et 2 pour la teinture et l'impression de matières contenant des groupes OH et NH.

4. Matières contenant des groupes OH et NH, teintes ou imprimées à l'aide des colorants des revendications 1 et 2.

5. Composés qui, à l'état d'acides libres, répondent à la formule

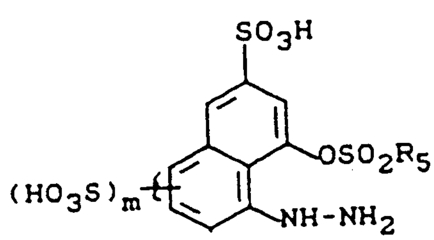

dans laquelle

m est égal à 0 ou 1,

$R_5$ représente un groupe alkyle en $C_1$-$C_4$ ou un groupe phényle éventuellement substitué.